# EUROPEAN PATENT APPLICATION

(11) **EP 4 517 095 A1**
(43) Date of publication of application: **05.03.2025**
(21) Application number: 23795525.7
(22) Date of filing: 27.04.2023
(51) Int. Cl.: F04D 13/14, F16K 11/22, F16K 31/04

(54) **FLUID CONTROL APPARATUS AND MANUFACTURING METHOD THEREFOR, AND DRIVING ASSEMBLY**

(30) Priority: 29.04.2022 CN 202210472213; 29.04.2022 CN 202210472369; 29.04.2022 CN 202210472396
(71) Applicant: Zhejiang Sanhua Automotive Components Co., Ltd., Zhejiang 310018 (CN)
(72) Inventor: BAO, Junfeng, Hangzhou, Zhejiang 310018 (CN); ZHANG, Jun, Hangzhou, Zhejiang 310018 (CN); HU, Jundi, Hangzhou, Zhejiang 310018 (CN); WANG, Lixin, Hangzhou, Zhejiang 310018 (CN); WANG, Zhengwei, Hangzhou, Zhejiang 310018 (CN)
(74) Representative: Maikowski & Ninnemann Patentanwälte Partnerschaft mbB
(86) International application number: PCT/CN2023/091077
(87) International publication number: WO 2023/208093

(57) **Abstract**

The application discloses a fluid control apparatus, a manufacturing method therefor and a drive assembly. The fluid control apparatus comprises a DRIVE ASSEMBLY and at least two fluid sub-assemblies. The drive assembly is provided with a first containing cavity. The drive assembly comprises a first housing and driving parts. The driving parts can drive the corresponding fluid sub-assembly to act. The first housing comprises a bottom wall part and a limiting part. The bottom wall part forms a part of the wall part of the first accommodating cavity. At least part of the limiting part protrudes out of the bottom wall part. At least one driving part comprises a stator assembly. The driving part comprising the stator assembly is defined as a first driving part. At least part of the first driving part is connected inside the limiting part in a limited manner. At least one other driving part is in limiting connection with the first housing. At least one fluid sub-assembly comprises a pump assembly. The pump assembly comprises a rotor assembly. The magnetic assembly of the rotor assembly can be located in the magnetic field range of the corresponding stator assembly in the working state. Thus, the occupied space of the drive assembly can be reduced.

## Description

This application claims the priorities to the following three applications, all of which are hereby incorporated by reference in their entireties:
1. Chinese Patent Application No. 202210472213.9, titled "FLUID CONTROL APPARATUS AND MANUFACTURING METHOD THEREFOR", filed on April 29, 2022 with the China National Intellectual Property Administration;
2. Chinese Patent Application No. 202210472369.7, titled "FLUID CONTROL APPARATUS", filed on April 29, 2022 with the China National Intellectual Property Administration; and
3. Chinese Patent Application No. 202210472396.4, titled "FLUID CONTROL APPARATUS", filed on April 29, 2022 with the China National Intellectual Property Administration.

### FIELD

The present application relates to the technical field of fluid control, and in particular to a fluid control apparatus and a manufacturing method therefor, and a drive assembly.

### BACKGROUND

Generally, a thermal management system includes multiple fluid elements, and the multiple fluid elements require separate drive elements for control, resulting in a large space occupied by the system. How to implement an integrated design for these drive elements to reduce the space occupied by the drive elements is a technical problem to be solved.

### SUMMARY

An object of the present application is to provide a fluid control apparatus, a method for manufacturing a fluid control apparatus, and a drive assembly, where the fluid control apparatus can reduce the space occupied by the drive assembly and improve the integration degree of the drive assembly.

In one aspect, a fluid control apparatus is provided according to an embodiment of the preset application, which includes a drive assembly and a fluid assembly. The drive assembly and the fluid assembly are connected to each other. The fluid assembly includes at least two fluid sub-assemblies, and the drive assembly includes a first housing and drive components. Each of the drive components cooperates with a corresponding one of the at least two fluid sub-assemblies. The first housing includes a bottom wall portion and a limiting portion connected to the bottom wall portion, and at least part of the limiting portion protrudes from the bottom wall portion. At least one of the drive components includes a stator assembly, the drive component including the stator assembly is defined as a first drive component, at least part of the first drive component is limitedly connected in the limiting portion, and at least another one of the drive components is limitedly connected to the first housing.

At least one of the at least two fluid sub-assemblies includes a pump assembly, the pump assembly includes a rotor assembly, the rotor assembly includes a magnetic assembly, and the magnetic assembly is configured to be located within a magnetic field range of a corresponding stator assembly in an operating state.

In another aspect, a method for manufacturing a fluid control apparatus is further provided according to an embodiment of the preset application, which includes:
forming a drive assembly, including: providing a first housing and at least two drive components, where the first housing includes a bottom wall portion and a limiting portion, the first housing has a first accommodation cavity, the bottom wall portion forms part of a wall portion of the first accommodation cavity, at least part of the limiting portion protrudes from the bottom wall portion, and at least part of the limiting portion protrudes from the bottom wall portion, at least one of the at least two drive components includes a stator assembly, and at least part of the stator assembly is limitedly connected in the limiting portion;
providing at least two fluid sub-assemblies, where at least one of the at least two fluid sub-assemblies includes a pump assembly, and the pump assembly includes a rotor assembly; and
matching the drive assembly with the pump assembly to allow a magnetic assembly of the rotor assembly to be located within a magnetic field range of a corresponding stator assembly in an operating state.

In another aspect, a drive assembly is further provided according to an embodiment of the preset application. The drive assembly includes a first housing and drive components, where the first housing includes a bottom wall portion and a limiting portion, the bottom wall portion is connected to the limiting portion, at least part of the limiting portion protrudes from the bottom wall portion, at least one of the drive components includes a stator assembly, the drive component including the stator assembly is defined as a first drive component, at least part of the first drive component is connected in the limiting portion in a limited manner, and at least another one of the drive components is connected to the first housing in a limited manner.

The fluid control apparatus, the method for manufacturing a fluid control apparatus, and the drive assembly are provided according to the embodiments of the present application. The fluid control apparatus includes the drive assembly and at least two fluid sub-assemblies. The drive assembly includes drive components which can cooperate with the corresponding fluid sub-assemblies, so as to facilitate the drive assembly to drive the corresponding fluid sub-assemblies to act. At least one of the drive components includes a stator assembly, and at least part of the stator assembly is limitedly connected in the limiting portion of the first housing, which facilitates the stator assembly to be limitedly connected to the first housing. Moreover, at least another one of the drive components is limitedly connected to the first housing, so that one drive assembly can integrate at least two drive components. Compared with the case that each fluid sub-assembly LK is provided with a separate drive device, the fluid control apparatus according to the embodiment of the present application can reduce the space occupied by the drive assembly and improve the integration degree of the drive assembly.

### BRIEF DESCRIPTION OF THE DRAWINGS

FIG. 1 is a schematic exploded view of a fluid control apparatus according to a first embodiment of the present application;
FIG. 2 is a three-dimensional structural diagram of the fluid control apparatus shown in FIG. 1;
FIG. 3 is a schematic exploded view of a drive assembly according to an embodiment of the present application;
FIG. 4 is a three-dimensional structural diagram of the drive assembly shown in FIG. 3;
FIG. 5 is a schematic cross-sectional view of the drive assembly shown in FIG. 4;
FIG. 6 is a schematic partial cross-sectional view of a combined structure of a first housing and a drive component according to an embodiment of the present application;
FIG. 7 is a schematic cross-sectional view of a drive assembly according to an embodiment of the present application;
FIG. 8 is a schematic cross-sectional view of a drive assembly according to an embodiment of the present application;
FIG. 9 is a three-dimensional structural diagram of a stator assembly shown in FIG. 4;
FIG. 10 is a schematic exploded view of a fluid assembly according to an embodiment of the present application;
FIG. 11 is a three-dimensional structural diagram of the fluid assembly shown in FIG. 10;
FIG. 12 is schematic cross-sectional view of the fluid assembly shown in FIG. 11 at one position;
FIG. 13 is a schematic partial cross-sectional view of a fluid assembly according to a second embodiment of the present application;
FIG. 14 is a three-dimensional structural diagram of a main housing according to an embodiment of the present application;
FIG. 15 is a schematic cross-sectional view of the main housing shown in FIG. 14;
FIG. 16 is a schematic cross-sectional view of the fluid assembly shown in FIG. 13;
FIG. 17 is a schematic partial cross-sectional view of the fluid control apparatus according to the first embodiment of the present application;
FIG. 18 is a schematic enlarged view of a portion Q1 in FIG. 17;
FIG. 19 is a schematic partial cross-sectional view of a combined structure of a drive assembly and a fluid assembly according to an embodiment of the present application;
FIG. 20 is a schematic enlarged view of a partial structure of the combined structure of the drive assembly and the fluid assembly shown in FIG. 19;
FIG. 21 is a schematic partial cross-sectional view of a combined structure of a drive assembly and a fluid assembly according to another embodiment of the present application;
FIG. 22 is a schematic partial cross-sectional view of a combined structure of a drive assembly and a fluid assembly according to another embodiment of the present application;
FIG. 23 is a schematic partial cross-sectional view of a combined structure of a drive assembly and a fluid assembly according to another embodiment of the present application;
FIG. 24 is a schematic partial cross-sectional view of a combined structure of a drive assembly and a fluid assembly according to another embodiment of the present application;
FIG. 25 is a schematic partial cross-sectional view of a combined structure of a drive assembly and a fluid assembly according to another embodiment of the present application;
FIG. 26 is a schematic partial cross-sectional view of a combined structure of a drive assembly and a fluid assembly according to another embodiment of the present application;
FIG. 27 is a schematic exploded view of a fluid control apparatus according to the second embodiment of the present application;
FIG. 28 is a three-dimensional structural diagram of the fluid control apparatus shown in FIG. 27;
FIG. 29 is a schematic exploded view of a drive assembly shown in FIG. 27;
FIG. 30 is a three-dimensional structural diagram of the drive assembly shown in FIG. 29;
FIG. 31 is a schematic cross-sectional view of the drive assembly shown in FIG. 29;
FIG. 32 is a schematic exploded view of a fluid assembly shown in FIG. 27
FIG. 33 is a three-dimensional structural diagram of the fluid assembly shown in FIG. 32;
FIG. 34 is a schematic front view of the fluid control apparatus shown in FIG. 27;
FIG. 35 is a schematic cross-sectional view of the fluid control apparatus shown in FIG. 34 taken along a line A-A;
FIG. 36 is a schematic cross-sectional view of the fluid control apparatus shown in FIG. 34 taken along a line B-B;
FIG. 37 is a schematic cross-sectional view of the fluid assembly shown in FIG. 33 at one position;
FIG. 38 is a schematic cross-sectional view of the fluid assembly shown in FIG. 33 at another position;
FIG. 39 is a schematic partial structural view of the fluid control apparatus shown in FIG. 27;
FIG. 40 is a schematic cross-sectional view of the fluid control apparatus shown in FIG. 27 at another position;
FIG. 41 is a schematic diagram of the connection of a first valve assembly, a first pump assembly and a second pump assembly shown in FIG. 27 in a first operation mode;
FIG. 42 is a schematic diagram of the connection of the first valve assembly, the first pump assembly and the second pump assembly shown in FIG. 27 in a second operation mode;
FIG. 43 is a schematic diagram of the connection of the first valve assembly, the first pump assembly and the second pump assembly shown in FIG. 27 in a third operation mode;
FIG. 44 is a schematic diagram of the connection of the first valve assembly, the first pump assembly and the second pump assembly shown in FIG. 27 in a fourth operation mode; and
FIG. 45 is a schematic block diagram of a method for manufacturing a fluid control apparatus according to an embodiment of the present application.

### DETAILED DESCRIPTION OF THE EMBODIMENTS

Features and exemplary embodiments in various aspects of the present application are described in detail hereinafter. In order to make the purpose, technical solutions and advantages of the present application clearer, the present application are further described in detail as follows in conjunction with the accompany drawings and specific embodiments. Relational terms such as "first", "second" and the like herein are merely used to distinguish one component with the same name from another, and do not necessarily require or imply any such actual relationship or order among these components.

A fluid control apparatus according to the embodiments of the present application may be applied to a thermal management system, for example, applied to a vehicle thermal management system. A fluid is controlled by the fluid control apparatus so as to facilitate the circulation of the fluid in the thermal management system.

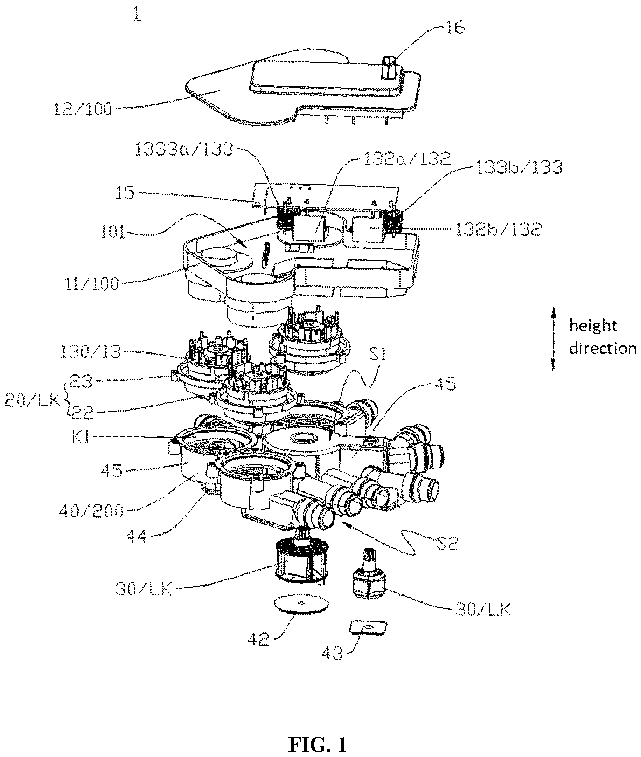

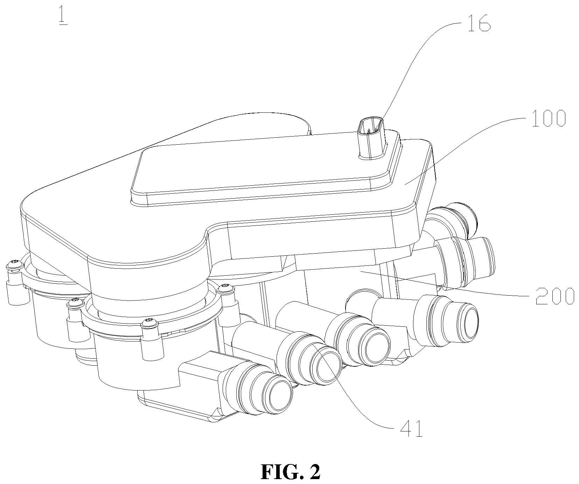

As shown in FIG. 1 to FIG. 8, a fluid control apparatus 1 is provided according to an embodiment of the present application. The fluid control apparatus 1 includes a drive assembly 100 and a fluid assembly 200. The drive assembly 100 and the fluid assembly 200 are sealingly connected to each other. In a specific implementation, the entire drive assembly 100 may be assembled with the entire fluid assembly 200, and a seal is provided between the drive assembly 100 and the fluid assembly 200 to achieve a sealing connection between the drive assembly 100 and the fluid assembly 200.

The drive assembly 100 includes at least two drive components 13. Each of the at least two drive components 13 may include a stator assembly 130, a motor 132, or a combination of a motor 132 and a gear assembly 133. The fluid assembly 200 includes at least two fluid sub-assemblies LK, each of the at least two fluid sub-assemblies LK includes an actuator. The fluid sub-assemblies LK may include one or a combination of a valve assembly 30 and a pump assembly 20. The actuator in the valve assembly 30 includes a valve core and the actuator in the pump assembly 20 includes a rotor assembly. When the drive component 13 is energized, the drive component 13 can drive the actuator in the fluid sub-assembly LK to act. For example, when the stator assembly 130 is energized, the stator assembly 130 generates a magnetic field, and the rotor assembly is rotated under the action of the magnetic field; alternatively, when the motor 132 is energized, an output shaft of the motor 132 rotates, so as to drive a valve core in the valve assembly 30 to rotate. Optionally, the number of the drive components 13 may be the same with the number of the fluid sub-assemblies LK, and the drive components 13 are in one-to-one correspondence with the fluid sub-assemblies LK. When one drive component 13 is energized, it can drive the actuator in a corresponding fluid sub-assembly LK to act. The action of the fluid sub-assembly LK in the fluid assembly 200 can enable the fluid to flow in the fluid control apparatus 1. It can be understood that the number of the drive components 13 may be different from the number of the fluid sub-assemblies LK, for example, the number of the drive components 13 may be less than the number of the fluid sub-assemblies LK, so that one drive component 13 can drive at least two fluid sub-assemblies LK. For example, one drive component 13 can drive at least two fluid sub-assemblies LK through a clutch mechanism. As shown in FIG. 1, in the embodiment, the number of the fluid sub-assemblies LK is five, and correspondingly, the number of the drive components 13 is five. The five drive components are in one-to-one correspondence with the five fluid sub-assemblies LK. In other embodiments, the number of the fluid sub-assemblies LK and the number of the drive components 13 may be set according to the requirements of the user, which may be two, three, four, six, or more.

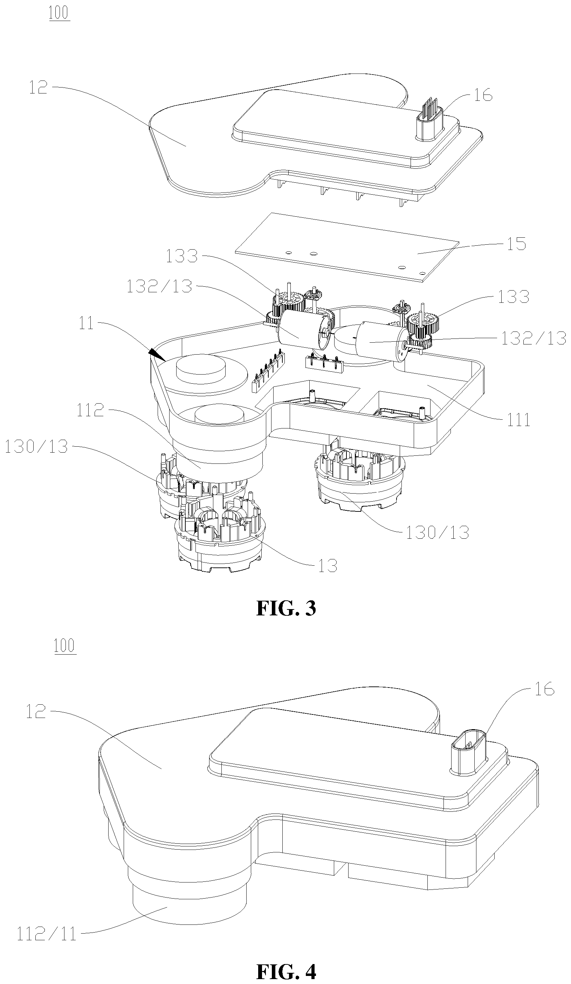

Furthermore, a drive assembly 100 is further provided according to an embodiment of the present application. As shown in FIG. 3 to FIG. 9, the drive assembly 100 includes a first housing 11 and a second housing 12. The drive assembly 100 has a first accommodation cavity 101, and the first housing 11 and the second housing 12 form at least part of a wall portion of the first accommodation cavity 101. In the embodiment, the second housing 11 includes a top cover portion, and the top cover portion and a bottom wall portion 111 are arranged opposite to each other in a height direction of the drive assembly 100. The first housing 11 and the second housing 12 are jointed to form the first accommodation cavity 101. At least part of the at least two drive components 13 are located in the first accommodation cavity 101, so that the at least two drive components 13 are integrated to the drive assembly 100. Compared with the case that multiple drive assemblies of a fluid control assembly are separated from each other, the number of lead wires is reduced, and the space occupied by the drive assembly 100 is reduced. Optionally, all of the drive components 13 may be connected to the first housing 11 in a limited manner, or some of the drive components 13 may be connected to the first housing 11 in a limited manner, which is not limited in the present application.

As shown in FIG. 3 to FIG. 9, in the drive assembly 100, the first housing 11 includes a bottom wall portion 111, a limiting portion 112, and a peripheral side wall 113. The peripheral side wall 113 is connected to the bottom wall portion 111, and the bottom wall portion 111 is connected to the limiting portion 112. For example, the peripheral side wall 113, the bottom wall portion 111, and the limiting portion 112 may be formed as an integral structure by injection molding, or may be fixedly connected by welding, or may be limitedly connected by a fastener or the like. At least part of the limiting portion 112 protrudes from the bottom wall portion 111 along the height direction of the drive assembly 100. The bottom wall portion 111 and the peripheral side wall 113 form part of the wall portion of the first accommodation cavity 101. At least one drive component 13 includes a stator assembly 130, and the drive component including the stator assembly 130 is defined as a first drive component. At least part of the first drive component is limitedly connected in the limiting portion 112. As shown in FIG. 3 to FIG. 8, at least part of the stator assembly 130 of the first drive component is located in the limiting portion 112; alternatively, the first drive component may further include a pump housing, and at least part of the stator assembly 130 is located inside a chamber of the pump housing. For example, the stator assembly 130 may be used as an insert to be fixed to the pump housing by injection molding, or the stator assembly 130 may be assembled into the chamber of the pump housing. In this way, at least part of the pump housing or at least part of a whole of the pump housing and the stator assembly 130 is located in the limiting portion 112. Herein, at least part of the stator assembly 130 is limitedly connected in the limiting portion 112, which may mean that: at least part of the first drive component and the limiting portion 112 are formed as an integral structure by injection molding, so that at least part of the first drive component is located in the limiting portion 112; or, the first drive component and the first housing 11 are separated from each other, the limiting portion 112 has a chamber, and at least part of the first drive component may be located in the chamber formed by the limiting portion 112. At least part of the first drive component is limitedly connected in the limiting portion 112, which facilitates the integration of at least two stator assemblies 130 in the drive assembly 100. Compared with the case of providing multiple driving devices, the fluid control apparatus according to the embodiment of the present application can reduce the space occupied by the drive assembly 100 and improve the integration degree of the drive assembly 100.

Further referring to FIG. 1 to FIG. 9, in the embodiment, the number of the drive components 13 in the drive assembly 100 is five. Gaps exist among orthographic projections of the five drive components 13 along the height direction of the drive assembly 100. Each of three of the five drive components 13 includes a stator assembly 130, and each of the three stator assemblies may be limitedly connected to a corresponding limiting portion and located in the corresponding limiting portion 112. Alternatively, in some other embodiments, one of the drive components 13 of the drive assembly 100 includes a stator assembly 130, and another of the drive components may be a motor or other drive components, thereby realizing the integration of different types of drive components 13.

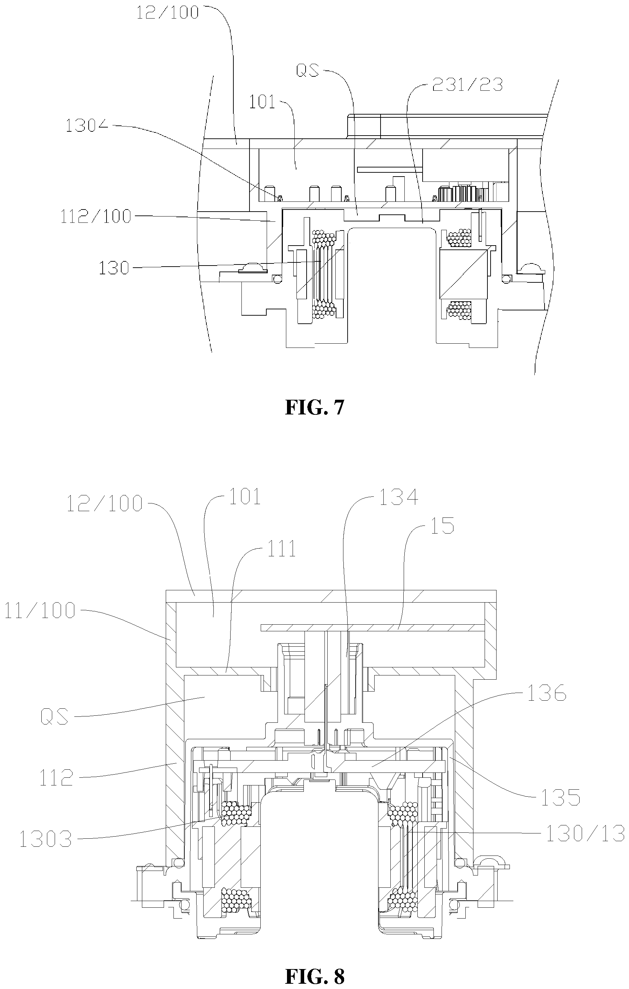

To facilitate the positioning of the stator assembly 130, in some embodiments, at least part of the limiting portion 112 extends from the bottom wall portion 111 in a direction away from the first accommodation cavity 101. In this case, at least part of the limiting portion 112 extends from the bottom wall portion 111 in a direction approaching the fluid sub-assembly LK, and at least part of the limiting portion 112 protrudes from the bottom wall portion 111 in a direction away from the second housing 12. Optionally, the stator assembly 130 may be fixed to the limiting portion 112 by injection molding, and fixation by injection molding herein refers to forming an integral structure by injection molding. Specifically, the stator assembly 130 may be used as an insert and integrally molded with the first housing 11 by injection molding, so that the stator assembly 130 and the limiting portion 112 are formed as an integral structure by injection molding. In this case, an electrical connection line may be lead out from the stator assembly 130 during injection molding, and thus the stator assembly 130 can be electrically connected to a controller through the electrical connection line. Alternatively, as shown in FIG. 7, the limiting portion 112 includes a mounting cavity QS, at least part of the stator assembly 130 is located inside the mounting cavity QS, and the stator assembly 130 may be limitedly connected to the first housing 11 by a fastener and the like. With the above arrangement, the stator assembly 130 and the limiting portion 112 can be conveniently limited. In a case that each of at least two drive components 13 includes the stator assembly 130, all of the stator assemblies 130 and the limiting portion 112 may be formed as an integral structure by injection molding, or, all of the stator assemblies 130 may be assembled into the mounting cavity QS of the limiting portion 112, or, some of the stator assemblies 130 and the limiting portion 112 are formed as an integral structure by injection molding, and some of the stator assemblies 130 and the limiting portion 112 are formed as an integral structure by injection molding.

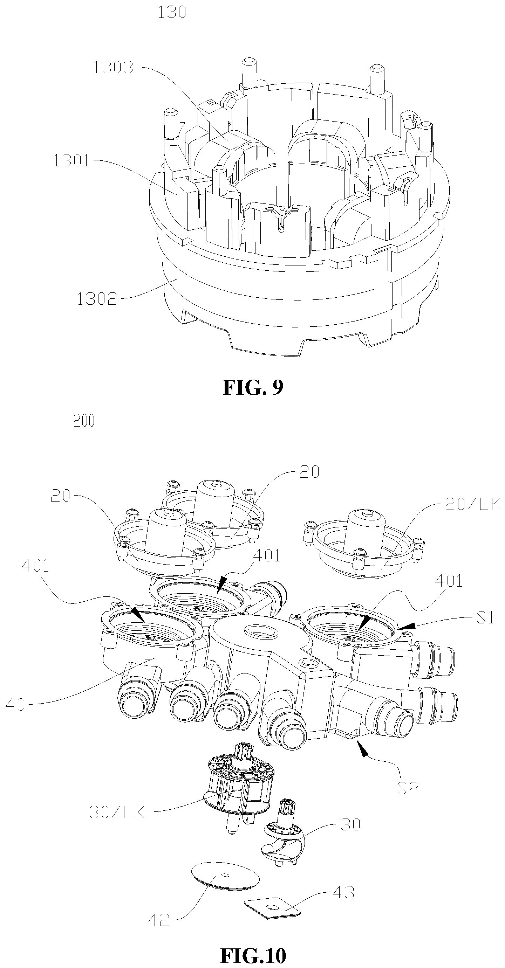

As shown in FIG. 8 and FIG. 9, in order to implement the function of the drive assembly, the drive assembly according to an embodiment of the present application further includes a controller 15, and the controller 15 may be a circuit board. The drive assembly including the stator assembly 130 is defined as a first drive component. In some other embodiments, the first drive component further includes a pump housing 135, a transition terminal 134 connected to the pump housing 135, and a connecting plate 136. The stator assembly 130 and the first housing 11 are separated from each other. The stator assembly 130 and the pump housing 135 may be formed as an integral structure by injection molding, or the stator assembly 130 is assembled into a chamber defined by the pump housing 135. In this case, both the stator assembly 130 and the pump housing 135 are assembled into the mounting cavity QS formed by the limiting portion 112. At least part of the stator assembly 130 and the connecting plate 136 are located inside the chamber of the pump housing 135. The pump housing 135 is sealingly connected to the first housing 11. For example, in FIG. 8, the pump housing 135 may be sealingly connected to the first housing 11 through a sealing ring; or the pump housing 135 and the limiting portion 112 of the first housing 11 are formed as an integral structure by injection molding. The stator assembly 130 includes a coil winding 1303, the coil winding 1303 is electrically connected to a pin in the transition terminal 134 through a conductive member in the connecting plate 136. Part of the transition terminal 134 passes through the bottom wall portion 111 and is located inside the first accommodation cavity 101. The transition terminal 134 is electrically connected to the controller 15. It should be noted that the drive component in the present application includes a stator assembly 130 or a motor 132, and the drive component may further include a lead wire structure or a terminal structure, and the lead wire structure or the terminal structure can electrically connect the controller 15 to the stator assembly 130 or the motor 132.

To achieve the electrical connection between the stator assembly 130 and the controller 15, a metal conductive structure may be provided in the first housing 11. The metal conductive structure and the first housing 11 may be formed as an integral structure by injection molding, so that the metal conductive structure is pre-embedded in the first housing 11. An Insulation Displacement Connector (IDC) may be used as an output terminal 1304 of the stator assembly 130, and in this case, the stator assembly 130 can be electrically connected to the controller 15 through an IDC pin.

In the embodiment, the drive assembly 100 according to the present application includes three stator assemblies 130. Correspondingly, each of the stator assemblies 130 includes an insulation frame 1301, a stator core 1302, and a coil winding 1303. Part of the stator core 1302 is embedded into the insulation frame 1301, and the coil winding 1303 is wound around the insulation frame 1301. When the coil winding 1303 IS energized, the coil winding 1303 can generate a magnetic field. The rotor assembly 22 in the pump assembly 20 can be located within the magnetic field range of the corresponding stator assembly 130, so that the stator assemblies 130 can drive the rotor assembly 22 to rotate. With the above arrangement, the stator assembly 130 can be integrated into the drive assembly 100.

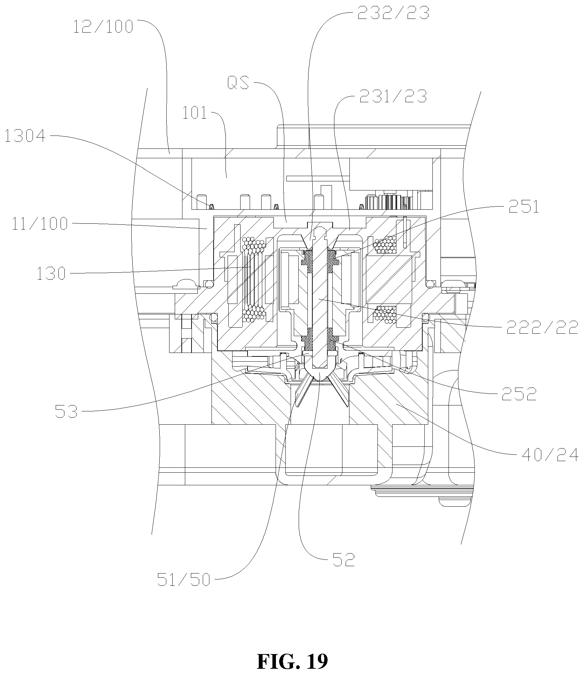

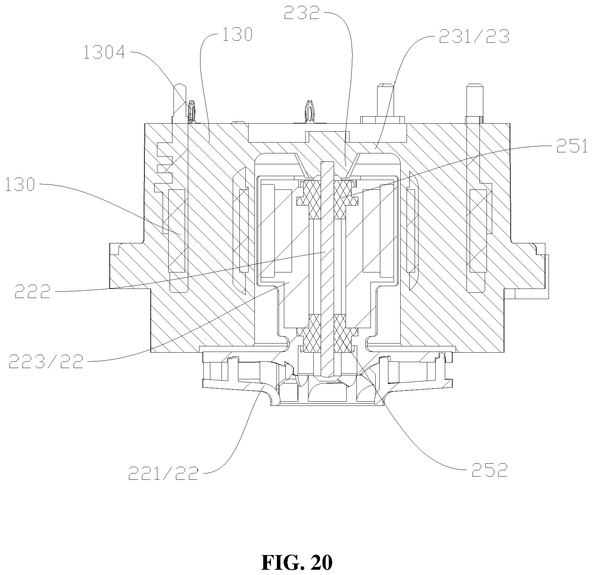

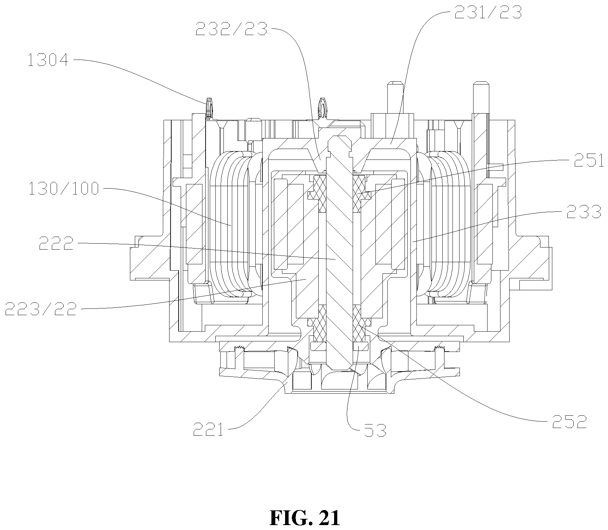

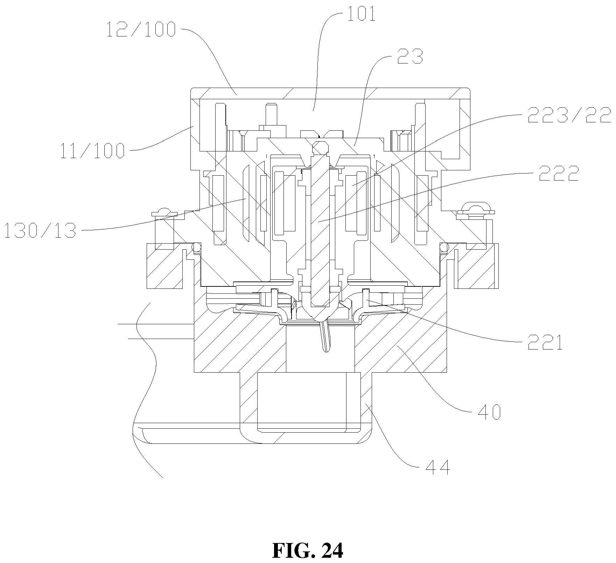

In some embodiments, as shown in FIG. 24, the fluid control apparatus may further include an isolation sleeve 23, and part of the isolation sleeve 23 is located on an inner peripheral side of the stator assembly 130. Optionally, the isolation sleeve 23 and the first housing 11 may be formed as an integral structure by injection molding. For example, the isolation sleeve 23 and the limiting portion 112 may be formed as an integral structure by injection molding. In this case, the stator assembly 130 and the limiting portion 112 may be formed into an integral structure by injection molding, or the stator assembly 130 is located inside the mounting cavity QS of the limiting portion 112. Optionally, as shown in FIG. 19 to FIG. 24, the isolation sleeve 23 and the stator assembly 130 are formed into an integral structure by injection molding, or at least part of the stator assembly 130 is located inside a chamber formed by the isolation sleeve 23. The isolation sleeve 23 and the stator assembly 130, as a whole, are separated from the first housing 11 and are sealingly connected to the first housing 11. A sealing ring is provided between the integral structure formed by the isolation sleeve 23 and the stator assembly 130 and the first housing 11, and the sealing between the integral structure and the first housing 11 is achieved by clamping the sealing ring. With the above arrangement, the limit arrangement and the sealing connection between the isolation sleeve 23 and the first housing 11 can be achieved.

In a specific implementation, in a case that the stator assembly 130 and the limiting portion 112 are formed into an integral structure by injection molding, the isolation sleeve 23 and the first housing 11 may be formed into an integral structure by injection molding, or the isolation sleeve 23 and the first housing 11 may be separated from each other and sealingly connected to each other. When the stator assembly 130 is assembled into the mounting cavity QS of the limiting portion 112, the isolation sleeve 23 and the first housing 11 may be formed into an integral structure by injection molding, or, the isolation sleeve 23 and the first housing 11 may be separated from each other and sealingly connected to each other, or, the isolation sleeve 23 and the stator assembly 130 may be formed into an integral structure by injection molding and the whole formed by the isolation sleeve 23 and the stator assembly 130 may be separated from the first housing 11 and sealingly connected to the first housing 11. In a case that the number of the stator assemblies 130 is at least two, the limiting connection ways between different stator assemblies 130 and the first housing 11 may be the same or different. The connection ways between the isolation sleeves 23 corresponding to different stator assemblies 130 and the first housing 11 may also be the same or different.

For the fluid assembly 200, further referring to FIG. 10 to FIG. 15, in some embodiments, the fluid assembly 200 further includes a main housing 40, the main housing 40 has a chamber, and at least part of the fluid sub-assembly LK is located inside a corresponding chamber. For example, the fluid sub-assemblies LK includes at least two pump assemblies 20, and each pump assembly 20 includes a rotor assembly 22. Part of the rotor assembly 22 can be sleeved with a corresponding stator assembly 130, so that the stator assembly 130 can drive the rotor assembly 22 to rotate when the stator assembly 130 is energized. Alternatively, each of the stator assembly 130 and the rotor assembly 22 may be of a disc-shaped structure. One of the pump assemblies is defined as a first pump assembly 20a, and another of the pump assemblies is defined as a second pump assembly 20b. The first pump assembly 20a includes a first rotor assembly 22a, and the second pump assembly 20b includes a second rotor assembly 22b. The first rotor assembly 22a can be located within the magnetic field range of the first stator assembly 130a, and the second rotor assembly 22b can be located within the magnetic field range of the second stator assembly 130b. In a specific implementation, the number of the pump assemblies may be set according to the requirements of the user, for example, the number of the pump assemblies may be two, three, four or more. In the embodiment, each of three of fluid sub-assemblies LK includes the pump assembly 20, and the three pump assemblies 20 are a first pump assembly 20a, a second pump assembly 20b, and a third pump assembly 20c, respectively. Gaps exist among the three pump assemblies. With the above arrangement, the integration of at least two pump assemblies 20 can be achieved, thereby reducing the pipeline connections among the pump assemblies 20.

Alternatively, in order to implement multiple operation modes of the fluid control apparatus, in some embodiments, at least one fluid sub-assembly LK includes a pump assembly 20, and at least another fluid sub-assembly LK includes a valve assembly 30. The valve assembly 30 includes a valve core 31 and a valve core shaft 32. The valve core 31 and the valve core shaft 32 may be formed into an integral structure by injection molding, or may be connected by interference fit or by a connection key. The valve core 31 is in transmission connection with an output shaft of the motor 132 through the valve core shaft 32, and the valve core 31 can rotate or translate under the action of the motor 132. In the embodiment, the valve core 31 can be driven to rotate, thereby implementing multiple operation modes of the fluid control apparatus 1. In the present application, the transmission connection between two components refers to that the driving force can be transmitted between the two components, where the two components may be directly connected or indirectly connected in a transmission manner. Specifically, the valve core shaft 32 of the valve assembly 30 may be in direct transmission connection with the motor 132; alternatively, the drive assembly 100 may further include a gear assembly 133, and the motor 132 can be in transmission connection with the valve core shaft 32 of the valve core 31 through the gear assembly 133. In a specific implementation, the number of the valve assemblies 30 may be set according to the requirements of the user. For example, in FIG. 1, according to the embodiment, each of two of the fluid sub-assemblies LK includes the valve assembly 30, and correspondingly, the drive assembly 100 includes two motors 132, so that the motor 132 can drive the corresponding valve assemblies 30 to act.

Furthermore, as shown in FIG. 3 to FIG. 16, in some embodiments, the pump assembly 20 includes a rotor assembly 22, and the isolation sleeve 23 of the fluid control apparatus is sleeved on the outer peripheral side of the rotor assembly 22. The stator assembly 130 and the corresponding rotor assembly 22 can be isolated from each other by the isolation sleeve 23, which prevents the working fluid from entering the space where the stator assembly 130 is located.

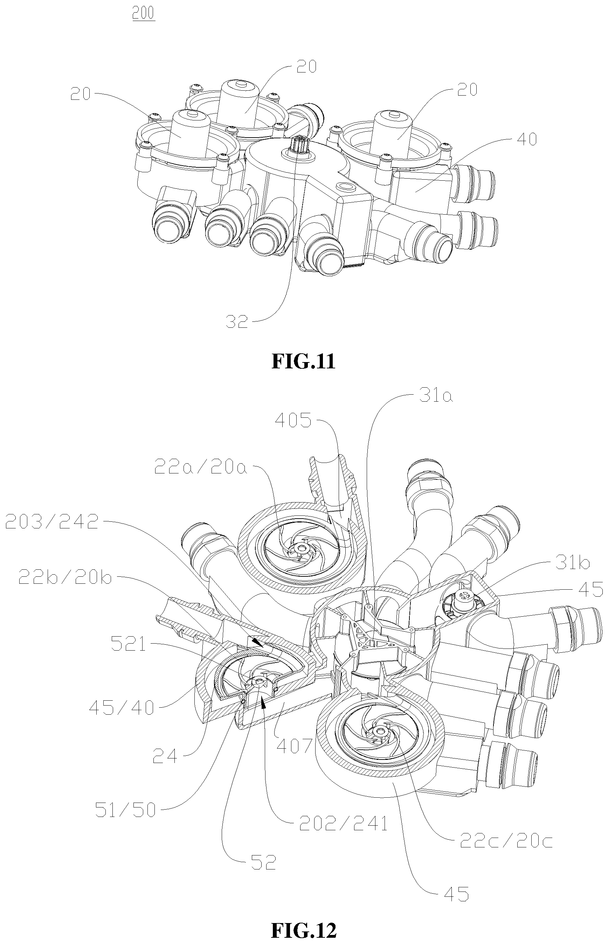

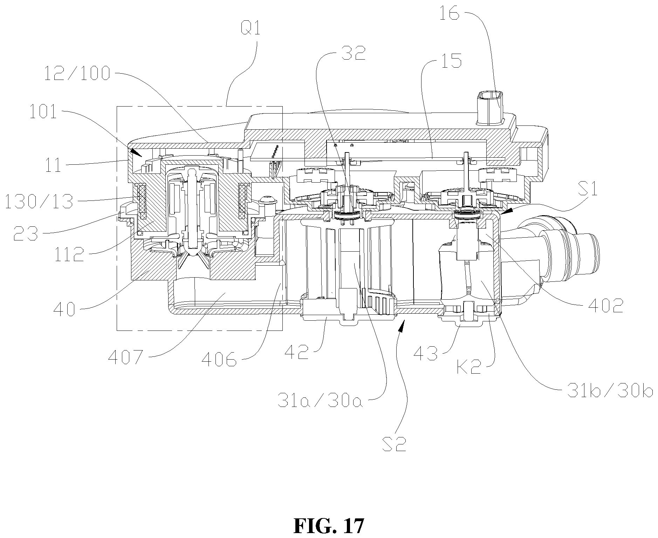

In order to achieve the circulation of fluid in the fluid control apparatus 1, in some embodiments, at least part of the main housing 40 is located on a side of the first housing 11 away from the first accommodation cavity 101. As shown in FIG. 1, at least part of the main housing 40 is located on the side of the first housing 11 away from the second housing 12. The main housing 40 further includes connecting pipes 41. The connecting pipes 41 may be arranged in the circumferential direction of the main housing 40, or the connecting pipes 41 may be integrated on at least one mounting surface. As shown in FIG. 11 to FIG. 17, in order to achieve a the circulation of the fluid in the pump assembly 20, the main housing 40 has a first chamber 401, a first duct 404, and a second duct 405, both the first duct 404 and the second duct 405 are in communication with the first chamber 401. At least part of the pump assembly 20 is located in the first chamber 401. The rotor assembly 22 rotates to drive the fluid to circulate in the first duct 404 and the second duct 405. Optionally, the rotor assembly 22 includes an impeller assembly 221 and a magnetic assembly 223, and the pump assembly 20 further includes a positioning shaft 222. The impeller assembly 221 is sleeved on an outer peripheral side of the positioning shaft 222, and at least part of the impeller assembly 221 may be located in the first chamber 401. At least part of the first duct 404 and the impeller assembly 221 are arranged along the height direction of the pump assembly 20. The position of the second duct 405 corresponds to the position of the impeller assembly 221. Optionally, at least part of a wall portion of the first duct 404 may be coaxially arranged with a rotating shaft of the impeller assembly 221, and the mouth of the second duct 405 is located at the edge of the impeller assembly 221 in the circumferential direction. The fluid can enter the impeller assembly 221 through the first duct 404. The fluid is discharged from the second duct 405 under the action of the centrifugal force of the impeller assembly 221. In this case, the first duct 404 may be used as an inlet duct of the pump assembly 20, and the second duct 405 may be used as an outlet duct of the pump assembly 20.

In a case that at least one fluid sub-assembly LK further includes a valve assembly 30, the main housing 40 further includes a second chamber 402, and the second chamber 402 is spaced apart from the first chamber 401. At least part of the pump assembly 20 is sealingly arranged in the first chamber 401, and at least part of the valve core 31 is located in the second chamber 402. Optionally, a seal may be provided between at least part of the pump assembly 20 and the main housing 40, or part of the structure of the pump assembly 20 may be connected to the main housing 40 by welding, so as to achieve sealing between the two. Similarly, a seal may be provided between the valve core 31 and the main housing 40, or multiple components of the main housing 40, which are separated from each other, may be connected by welding, so that the valve core 31 can be sealingly arranged in the second chamber 402. With the above arrangement, at least one pump assembly 20 and at least one valve core 31 can be integrated into the main housing 40, thereby reducing the space occupied by the fluid assembly 200 and further reducing the space occupied by the fluid control apparatus 1.

As shown in FIG. 12 to FIG. 19, in order to achieve fluid interaction between the pump assembly 20 and the valve assembly 30, in some embodiments, the main housing 40 further has a communication channel 407 and multiple flow channels 406. The main housing 40 has a flow channel plate 44 and a chamber housing 45, the chamber housing 45 and the flow channel plate 44 are formed as an integral structure by injection molding. The first chamber 401, the second chamber 402, and the flow channels 406 are located at the chamber housing 45, and the communication channel 407 is located at the flow channel plate 44. At least part of the flow channel plate 44 is connected between two fluid sub-assemblies LK, for example, the flow channel plate 44 may be connected between the pump assembly 20 and the valve assembly 30, or the flow channel plate 44 may be connected between two valve assemblies 30. In the embodiment of the present application, the flow channel plate 44 and the chamber housing 45 are formed into an integral structure, which reduces pipeline connections of the chamber housings 45 and improves the integration degree of the fluid control apparatus. Further, the multiple flow channels 406 are distributed on the outer peripheral side of the second chamber 402, a flow channel 406 is in communication with one of the first duct 404 and the second duct 405 through the communication channel 407. The valve core 30 includes a communication cavity 31, and the communication cavity 311 can communicate at least two flow channels 406. The flow channel 406 is in communication with the first duct 404 or the second duct 405 through the communication channel 407, and the extension direction of the communication channel 407, and the extension direction of the flow channel 406, and the extension direction of the first duct 404 or the second duct 405 intersect.

In some embodiments, referring to FIG. 1 to FIG. 19, the pump assemblies 20 includes a first pump assembly 20a, a second pump assembly 20b, and a third pump assembly 20c. The valve assemblies 30 includes a first valve assembly 30a and a second valve assembly 30b. The first valve assembly 30a includes a first valve core 31a and a first seal (not shown in the drawings). The second valve assembly 30b includes a second valve core 31b and a second seal (not shown in the drawings). The first pump assembly 20a, the second pump assembly 20b, the third pump assembly 20c, and the second valve assembly 30b are distributed on the outer peripheral side of the first valve assembly 30a. Flow channels 406 located on the outer peripheral side of the first valve assembly 30a are defined as first flow channels 4061. The first flow channels 4061 are located at a wall portion of the chamber where the first valve assembly 30a is located, and the number of the first flow channels 4061 may be at least eight, for example, may be eight. Flow channels located on the outer peripheral side of the second valve assembly 30b are defined as second flow channels 4062, and the second flow channels 4062 are located at a wall portion of the chamber where the second valve assembly 30b is located. The number of the second flow channels 4062 may be at least three, for example, may be three. One of the first flow channels 4061 is in communication with one of the second flow channels 4062. The first valve core 31a includes at least four communication cavities 311, and the communication cavities 31 of the first valve core 31a can communicate the first flow channels 4061 in pairs. A communication cavity of the second valve core 31b can communicate two or three second flow channels 4062. The communication and the switching of at least two first flow channels 4061 can be realized by rotating the first valve core 31a, and the communication, the switching, and the flow regulation among the second flow channels 4062 can be realized by rotating the second valve core 31b.

Based on this, the communication channels 407 of the main housing 40 may include a first communication channel 407a, a second communication channel 407b, and a third communication channel 407c. The first chamber 401 includes a first sub chamber A1, a second sub chamber A2 and a third sub chamber A3. The second chamber 402 includes a fourth sub chamber A4 and a fifth sub chamber A5. At least part of the first pump assembly 20a is located inside the first sub chamber A1, at least part of the second pump assembly 20b is located inside the second sub chamber A2, and at least part of the third pump assembly 20c is located inside the third sub chamber A3. At least part of the first valve assembly 30a is located inside the fourth sub chamber A4, and at least part of the second valve assembly 30b is located inside the fifth sub chamber A5. The first sub chamber A1, the second sub chamber A2 and the third sub chamber A3 are in communication with the fourth sub chamber A4, and the fifth sub chamber A5 is in communication with the fourth sub chamber A4. The first duct 404 includes a first sub duct 404a, a second sub duct 404b, and a third sub duct 404c, and the second duct 405 includes a fourth sub duct 405a, a fifth sub duct 405b, and a sixth sub duct 405c. Both the first sub duct 404a and the fourth sub duct 405a are in communication with the first sub chamber A1, both the second sub duct 404b and the fifth sub duct 405b are in communication with the second sub chamber A2, and both the third sub duct 404c and the sixth sub duct 405c are in communication with the third sub chamber A3. The first communication channel 407a communicates the first sub chamber A1 with the fourth sub chamber A4. Specifically, the first communication channel 407a communicates the first sub duct 404a with one of the first flow channels 4061 located on the outer peripheral side of the first valve core 31a, and the fourth sub duct 405a is in communication with an inner cavity of the connecting pipe 41. The second communication channel 407b communicates the second sub chamber A2 with the fourth sub chamber A4. Specifically, the second communication channel 407b communicates the second sub duct 404b with another one of the first flow channels 4061 located on the outer peripheral side of the first valve core 31a, and the fifth sub duct 405b is in communication with the inner cavity of the connecting pipe 41. The third communication channel 407c communicates the third sub chamber A3 with the fourth sub chamber A4. Specifically, the third communication channel 407c communicates the sixth sub duct 405c with another one of the first flow channels 4061 located on the outer peripheral side of the first valve core 31a, and the third sub duct 404c is in communication with the inner cavity of the connecting pipe 41.

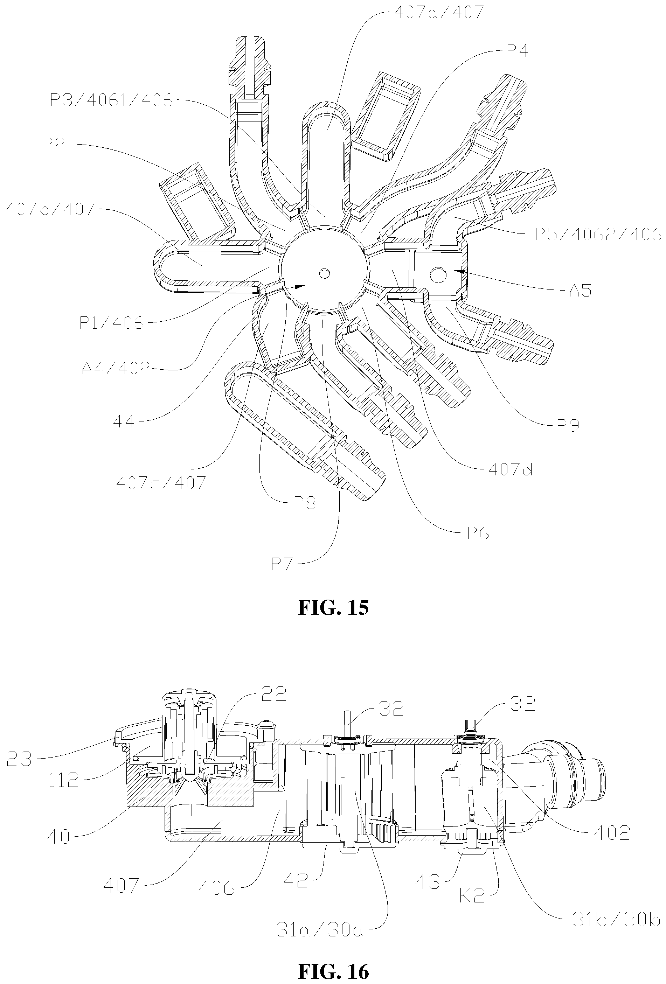

Furthermore, the main housing 40 further includes a fourth communication channel 407d, and the fourth communication channel 407d communicates the fifth sub chamber A5 with the fourth sub chamber A4. The first communication channel 407a, the second communication channel 407b, the third communication channel 407c, and the fourth communication channel 407d are respectively provided on the outer peripheral surface of the wall portion of the fourth sub chamber A4. As shown in FIG. 15, in some embodiments, at least part of the first communication channel 407a, at least part of the second communication channel 407b, at least part of the third communication channel 407c, and at least part of the fourth communication channel 407d are arranged at intervals along the circumferential direction of the wall portion of the fourth sub chamber A4. In some other embodiments, the above communication channels may also be arranged in other forms, for example, at least part of the communication channels are arranged along the height direction of the fluid control apparatus. With the above arrangement, the pump assemblies 20 and the valve assemblies 30 can co-work to achieve multiple operation modes of the fluid control apparatus. In a case that the fluid control apparatus is applied to a thermal management system, multiple operating states of the thermal management system can be achieved, thereby facilitating the realization of functions such as cooling and temperature reduction for different heat sources.

The fluid control apparatus according to the embodiment of the present application is described below.

Referring to FIG. 1 to FIG. 26 together, in some embodiments, each of at least two of the drive components 13 includes a stator assembly 130, and each of at least two of the fluid sub-assemblies LK includes a pump assembly 20. One of the pump assemblies is defined as a first pump assembly 20a, and another of the pump assemblies is defined as a second pump assembly 20b. One of the stator assemblies is defined as a first stator assembly 130a, and another of the stator assemblies is defined as a second stator assembly 130b. The limiting portion 112 includes a first limiting portion 112a and a second limiting portion 112b. At least part of the first stator assembly 130a is limitedly connected in the first limiting portion 112a, and at least part of the second stator assembly 130b is limitedly connected in the second limiting portion 112b. The first pump assembly 20a includes a first rotor assembly 22a, and the second pump assembly 20b includes a second rotor assembly 22b. The first rotor assembly 22a can be located within the magnetic field range of the first stator assembly 130a. The second rotor assembly 22b can be located within the magnetic field range of the second stator assembly 130b. Optionally, part of the first rotor assembly 22a is located on the inner side of the first stator assembly 130a, and part of the second rotor assembly 22b is located on the inner side of the second stator assembly 130b. With the above arrangement, at least two stator assemblies 130 can be integrated into the drive assembly 100. Compared with the case of arranging two stator assemblies 130 in different drive assemblies, the integration degree of the drive assembly 100 can be improved.

As shown in FIG. 1 to FIG. 9, in the embodiment, each of three of the drive components 13 includes a stator assembly 130, and the three stator assemblies 130 are a first stator assembly 130a, a second stator assembly 130b, and a third stator assembly 130c, respectively. Correspondingly, the first housing 11 includes a first limiting portion 112a, a second limiting portion 112b, and a third limiting portion 112c. The number of fluid sub-assemblies LK, each of which includes a pump assembly 20, may be two, three, four, or more. In the embodiment, the fluid sub-assemblies LK includes three pump assemblies 20, and the three pump assemblies 20 are defined as a first pump assembly 20a, a second pump assembly 20b, and a third pump assembly 20c, respectively. Part of the third rotor assembly 22c is located on the inner side of the third stator assembly 130c, and the third rotor assembly 22c can be located within the magnetic field range of the third stator assembly 130c. Optionally, the first stator assembly 130a and the first limiting portion 112a may be formed into an integral structure by injection molding, the second stator assembly 1302 and the second limiting portion 112b may be formed into an integral structure by injection molding, the third stator assembly 130c and the third limiting portion 112c may be formed into an integral structure by injection molding, and the limiting portion 112 and the bottom wall portion 111 may be formed into an integral structure by injection molding.

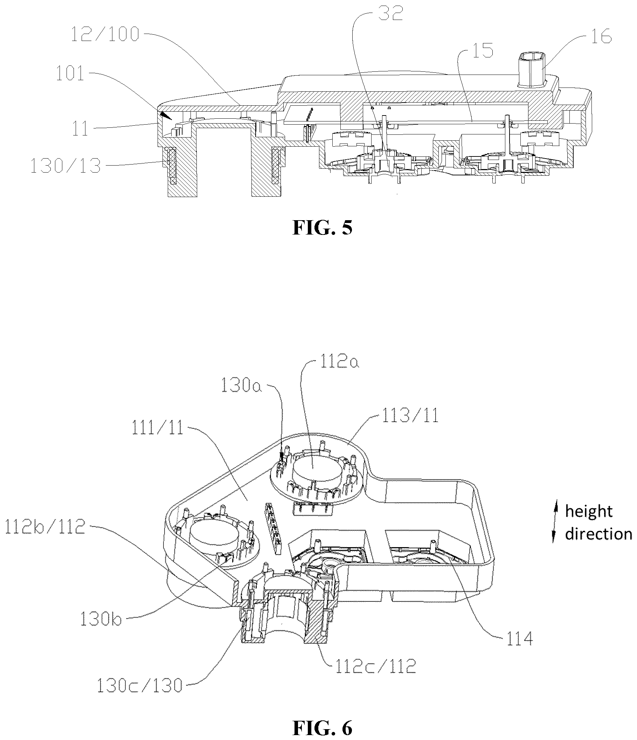

In some embodiments, each of at least one of the fluid sub-assemblies LK includes a pump assembly 20, and each of at least another one of the fluid sub-assemblies LK includes a valve assembly 30. Each of at least one of the drive components 13 includes a stator assembly 130, and each of at least another one of the drive components 13 includes a motor 132. The first housing 11 further includes a mounting portion 114 (shown in FIG. 6), the mounting portion 114 is spaced apart from the limiting portion 112. The motor 132 is limitedly connected to the mounting portion 114, and at least part of the motor 132 is located inside the first accommodation cavity 101. With the above arrangement, at least one stator assembly 130 and at least one motor 132 can be integrated into the same drive assembly 100. The valve assembly 30 includes a valve core 31 and a valve core shaft 32. The valve core 31 and the valve core shaft 32 may be formed into an integral structure by injection molding, or may be connected by interference fit or by a connection key. The valve core 31 is in transmission connection with the output shaft of the motor 132 through the valve core shaft 32, and the valve core 31 can rotate or translate under the action of the motor 132. In the embodiment, the valve core 31 can be driven to rotate, thereby implementing multiple operation modes of the fluid control apparatus 1. Specifically, the valve core shaft 32 of valve assembly 30 may be directly in transmission connection with the motor 132. Alternatively, the drive assembly 100 may further include a gear assembly 133, and the motor 132 may be in transmission connection with the valve core shaft 32 of the valve core 31 through the gear assembly 133. With the above arrangement, at least one stator assembly 130 and at least one motor 132 can be integrated into the same drive assembly 100, which is beneficial to reducing the space occupied by the drive assembly 100. In a specific implementation, the number of the valve assemblies 30 and the number of the motors 132 may be set according to the requirements of the user. For example, as shown in FIG. 1, in the embodiment, each of two of fluid sub-assemblies LK includes the valve assembly 30, and correspondingly, the drive assembly 100 includes two motors 132, so that the motors 132 can drive the actions of the corresponding valve assemblies 30.

Specifically, further referring to FIG. 1 to FIG. 26, the drive assembly 100 includes five drive components 13, and each of three of the five drive components 13 includes a stator assembly 130. These three stator assemblies 130 are defined as a first stator assembly 130a, a second stator assembly 130b, and a third stator assembly 130c, respectively. Each of the rest two drive components 13 includes a transmission assembly composed of a motor 132 and a gear assembly 133. One of the transmission assemblies includes a first motor 132a and a first gear assembly 133a, and the other one of the transmission assemblies includes a second motor 132b and a second gear assembly 133b. Correspondingly, the fluid assembly 200 includes five fluid sub-assemblies LK, each of three of the five fluid sub-assemblies LK includes a pump assembly 20, and each of the rest two of the five fluid sub-assemblies LK includes a valve assembly 30. The three pump assemblies 20 are defined as a first pump assembly 20a, a second pump assembly 20b and a third pump assembly 20c, respectively. One of the valve assemblies 30 includes a first valve core 31a, and the other one of the valve assemblies 30 includes a second valve core 31b. The first stator assembly 130a can drive a rotor assembly in the first pump assembly 20a to rotate, the second stator assembly 130b can drive a rotor assembly in the second pump assembly 20b to rotate, and the third stator assembly 130c can drive a rotor assembly in the third pump assembly 20c to rotate. The first transmission assembly composed of the first motor 132a and the first gear assembly 133a can drive the first valve core 31a to rotate, and the second transmission assembly composed of the second motor 132b and the second gear assembly 133b can drive the second valve core 31b to rotate. Optionally, along the height direction of the fluid control apparatus 1, the sides of the first pump assembly 20a, the second pump assembly 20b, and the third pump assembly 20C away from the main housing 40 are located at the same height, that is, the ends of the three pump assemblies close to the drive assembly 100 may be located at the same height to facilitate the assembly with the three stator assemblies in the drive assembly 100. Optionally, the sides of the three stator assemblies corresponding to the three pump assemblies away from the main housing 40 may also be located at the same height to facilitate assembly and electrical connection with the controller. Part of the valve assembly 30 and part of the pump assembly 20 are located at the same height. With the above arrangement, the height of the fluid control apparatus can be reduced, the controller of the valve assembly 30 and the controller of the pump assembly 20 can be integrated with the first housing, and electrical connection with the same controller can be realized.

The operation modes of the fluid control apparatus shown in FIG. 1 to FIG. 26 are introduced below. Seven first flow channels 4061 are defined as a first sub flow channel P1, a second sub flow channel P2, a third sub flow channel P3, a fourth sub flow channel P4, a sixth sub flow channel P6, a seventh sub flow channel P7, and the eighth sub flow channel P8, respectively. Two second flow channels 4062 are defined as a fifth sub flow channel P5 and a ninth sub flow channel P9, respectively. The communication cavities of the first valve core 31a are defined as first communication cavities, and the communication cavity of the second valve core 31b is defined as a second communication cavity. The fluid control apparatus according to the embodiment of the present application has at least one of the following operation modes.

In a first operation mode, the first valve core 31a rotates to a first position. The first sub flow channel P1 and the second sub flow channel P2 are in communication through one of the first communication cavities, the third sub flow channel P3 and the fourth sub flow channel P4 are in communication through another of the first communication cavities, the sixth sub flow channel P6 and the seventh sub flow channel P7 are in communication through another of the first communication cavities, and at least one of the fifth sub flow channel P5 and the ninth sub flow channel P9 is in communication with the eighth sub flow channel P8 through another of the first communication cavities, the fourth communication channel 407d, and the second communication cavity.

In a second operation mode, the first valve core 31a rotates to a second position. The third sub flow channel P3 and the second sub flow channel P2 are in communication through one of the first communication cavities. At least one of the fifth sub flow channel P5 and the ninth sub flow channel P9 is in communication with the fourth sub flow channel P4 through another of the first communication cavities, the fourth communication channel 407d, and the second communication cavity. The seventh sub flow channel P7 and the eighth sub flow channel P8 are in communication through another of the first communication cavities, and the sixth sub flow channel P6 and the first sub flow channel P1 are in communication through another of the first communication cavities.

In a third operation mode, the first valve core 31a rotates to a third position. The first sub flow channel P1 and the eighth sub flow channel P8 are in communication through one of the first communication cavities. The third sub flow channel P3 and the fourth sub flow channel P4 are in communication through another of the first communication cavities. At least one of the fifth sub flow channel P5 and the ninth sub flow channel P9 is in communication with the sixth sub flow channel P6 through another of the first communication cavities, the fourth communication channel 407d, and the second communication cavity. The second sub flow channel P2 and the seventh sub flow channel P7 are in communication through another of the first communication cavities.

In a fourth operation mode, the first valve core 31a rotates to a fourth position. The first sub flow channel P1 and the second sub flow channel P2 are in communication through one of the first communication cavities. At least one of the fifth sub flow channel P5 and the ninth sub flow channel P9 is in communication with the fourth sub flow channel P4 through another of the first communication cavities, the fourth communication channel 407d, and the second communication cavity. The sixth sub flow channel P6 and the seventh sub flow channel P7 are in communication through another of the first communication cavities, and the third sub flow channel P3 and the eighth sub flow channel P8 are in communication through another of the first communication cavities.

In a fifth operation mode, the first valve core 31a rotates to a fifth position. The third sub flow channel P3 and the second sub flow channel P2 are in communication through one of the first communication cavities. The seventh sub flow channel P7 and the eighth sub flow channel P8 are in communication through another of the first communication cavities. At least one of the fifth sub flow channel P5 and the ninth sub flow channel P9 is in communication with the sixth sub flow channel P6 through another of the first communication cavities, the fourth communication channel 407d, and the second communication cavity. The first sub flow channel P1 and the fourth sub flow channel P4 are in communication through another of the first communication cavities.

In a sixth operation mode, the first valve core 31a rotates to a sixth position. The first sub flow channel P1 and the eighth sub flow channel P8 are in communication through one of the first communication cavities, the third sub flow channel P3 and the fourth sub flow channel P4 are in communication through another of the first communication cavities, the sixth sub flow channel P6 and the seventh sub flow channel P7 are in communication through another of the first communication cavities, and at least one of the fifth sub flow channel P5 and the ninth sub flow channel P9 is in communication with the second sub flow channel P2 through another of the first communication cavities, the fourth communication channel 407d, and the second communication cavity.

In a seventh operation mode, the first valve core 31a rotates to a seventh position. The first sub flow channel P1 and the second sub flow channel P2 are in communication through one of the first communication cavities. The seventh sub flow channel P7 and the eighth sub flow channel P8 are in communication through another of the first communication cavities. At least one of the fifth sub flow channel P5 and the ninth sub flow channel P9 is in communication with the fourth sub flow channel P4 through another of the first communication cavities, the fourth communication channel 407d, and the second communication cavity. The sixth sub flow channel P6 and the third sub flow channel P3 are in communication through another of the first communication cavities.

In an eighth operation mode, the first valve core 31a rotates to an eighth position. The first sub flow channel P1 and the eighth sub flow channel P8 are in communication through one of the first communication cavities, the second sub flow channel P2 and the third sub flow channel P3 are in communication through another of the first communication cavities, at least one of the fifth sub flow channel P5 and the ninth sub flow channel P9 is in communication with the sixth sub flow channel P6 through another of the first communication cavities, the fourth communication channel 407d, and the second communication cavity, and the fourth sub flow channel P4 and the seventh sub flow channel P7 are in communication through another of the first communication cavities.

Optionally, the modes of the communication between different flow channels or the proportional adjustment of the flow channels corresponding to the second valve core 31b may be achieved by rotating the second valve core 31b. It can be understood that in a case that the fluid control apparatus has more flow channels or more ports, in order to achieve the switching of communication modes between multiple flow channels or multiple ports, the fluid control apparatus may further include three or more valve cores, which is not limited in the present application.

Each of the first chamber 401 and the second chamber 402 has a port located on a surface of the main housing 40. In order to facilitate the assembly of the pump assembly 20 and the valve assembly 30, a first mounting port K1 of the first chamber 401 and a second mounting port K2 of the second chamber 402 are arranged on different surfaces of the main housing 40, respectively. As shown in FIG. 1, the port of the first chamber 401 and the port of the second chamber 402 are arranged on two opposite sides of the main housing 40 in the height direction of the main housing 40, respectively. In this case, the main housing 40 includes a chamber housing 45 and a bottom cover, the bottom cover may be sealingly connected to the chamber housing 45 by welding or the like. For example, the bottom cover includes a first bottom cover 42 and a second bottom cover 43, the flow channels and the chambers may be located at the chamber housing 45, and the first bottom cover 42 and the second bottom cover 43 are sealingly connected to the chamber housing 45, for example, by welding, bonding, a sealing ring or the like.

In some embodiments, the chamber housing 45 includes a chamber housing side wall and a chamber housing top wall. Part of the chamber housing side wall and the chamber housing top wall form at least part of a wall portion of the first chamber 401. The chamber housing side wall and the chamber housing top wall are formed as an integral structure, and the chamber housing top wall and the first mounting port K1 are located on the same side of the main housing 40. With the above arrangement, the assembly error between the valve assembly 30 and the corresponding drive component 13 can be reduced, the strength of the chamber housing 45 can be improved, and the drive components corresponding to the valve assembly 30 and the pump assembly 20 can be located on the same side of the main housing 40.

In a specific implementation, the main housing 40 includes a first end portion S1 and a second end portion S2, and the first end portion S1 and the second end portion S2 are opposite to each other along the height direction of the main housing 40. The first mounting port K1 of the first chamber 401 is located at the first end portion S1, the second mounting port K2 of the second chamber 402 is located at the second end portion S2, and the drive assembly 100 is located on a side of the first end portion S1 away from the second end portion S2. With the above arrangement, the pump assembly 20 can be assembled with the main housing 40 on one side of the main housing 40, and the valve assembly 30 can be assembled with the main housing 40 from the other side of the main housing 40, so that the drive component for driving the pump assembly 20 and the drive component for driving the valve assembly 30 can be arranged on the same side, which facilitates the integration of the multiple drive components. In a case that the number of the valve assemblies 30 is at least two, all of the valve assemblies 30 may be mounted on the same side of the main housing 40 to unify the assembly reference, and then all of the pump assemblies 20 may be mounted from the other side of the main housing 40 to reduce assembly errors, which achieves good coaxiality between the at least two valve assemblies 30 and the corresponding drive components 13. It can be understood that the first mounting port K1 of the first chamber 401 and the second mounting port K2 of the second chamber 402 may be provided on the same side of the main housing 40, so that the pump assembly 20 and the valve assembly 30 are assembled from the same side of the main housing 40,which is not limited in the present application.

Further referring to FIG. 16 to FIG. 26, in some embodiments, in a case that each pump assembly 20 further includes an isolation sleeve 23 and the isolation sleeve 23 is sealingly connected to the first housing 11, for example, in a case that the isolation sleeve 23 and the first housing 11 are formed into an integral structure by injection molding or the isolation sleeve 23 and the first housing 11 are separated from each other, the isolation sleeve 23 and the main housing 40 may be formed into an integral structure by injection molding. Alternatively, in a case that the isolation sleeve 23 and the first housing 11 are formed into an integral structure by injection molding or the isolation sleeve 23 and the first housing 11 are separated from each other, the isolation sleeve 23 and the main housing 40 are separated from each other, and one side of the isolation sleeve 23 in the thickness direction is sealingly connected to the main housing 40 through a sealing ring, where the sealing ring may be an O-ring or an X-ring. With the above arrangement, the isolation sleeve 23 and the main housing 40 can be connected with each other in a limited and sealing manner. In this case, the stator assembly 130 and the first housing 11 may be formed into an integral structure by injection molding, or the stator assembly 130 and the first housing 11 may be separated from each other and assembled with each other.

In a specific implementation, in order to make the isolation sleeve 23 sealingly connected with the first housing 11 and the main housing 40, optionally, the fluid control apparatus 1 may include sealing rings. In a case that the isolation sleeve 23 and the first housing 11 are separately arranged, one of the sealing rings may be sandwiched between one side of the isolation sleeve 23 in the thickness direction and the first housing 11. In a case that the isolation sleeve 23 and the main housing 40 are separately arranged, one of the sealing rings may be sandwiched between the other side of the isolation sleeve 23 in the thickness direction and the main housing 40. Thus, the sealing performance of the fluid control apparatus 1 is achieved, the leakage of the fluid is reduced, and the fluid entering the stator assembly can be reduced or the fluid can be prevented from entering the stator assembly, thereby protecting the stator assembly.

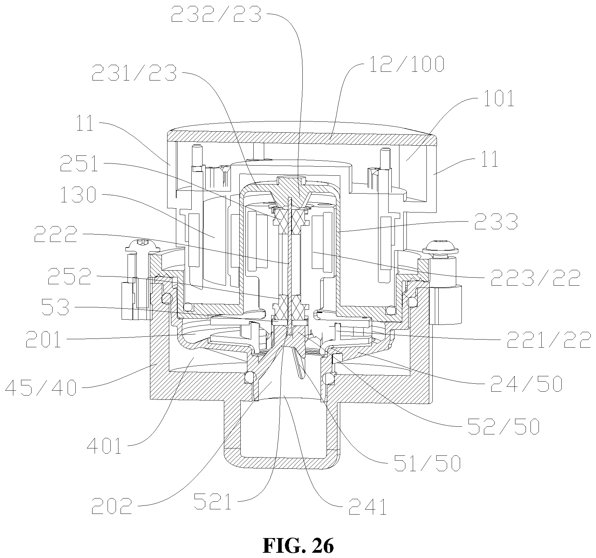

Further referring to FIG. 12 and FIG. 26, in some embodiments, the pump assembly 20 further includes a pump cover 24, and the pump cover 24 is sealingly connected to the isolation sleeve 23. Specifically, the pump cover 24 may be welded to the isolation sleeve 23, and the rotor assembly 22 is located inside the space formed between the pump cover 24 and the isolation sleeve 23. The pump cover 24 has a first port 241 and a second port 242. The rotor assembly 22 can drive the fluid to flow between the first port 241 and the second port 242. At least part of the pump cover 24 is located inside the first chamber 401 and the pump cover 24 is sealingly connected to the main housing 40. The first port 241 is in communication with the first duct 404, and the second port 242 is in communication with the second duct 405. In a specific implementation, the pump assembly 20 has a pump chamber 201, a first channel 202, and a second channel 203. The pump cover 24 forms at least part of a wall portion of the pump chamber 201, and the first channel 202 and the second channel 203 may be located at the pump cover 24. The first port 241 is located at the first channel, and the second port 242 is located at the second channel. At least part of the first channel 202 is located in the first duct 404, and at least part of the second channel 203 is located in the second duct 405.

In order to achieve a sealing connection between the pump cover 24 and the main housing 40, in some embodiments, as shown in FIG. 26, a sealing ring may be sandwiched between the pump cover 24 and the main housing 40, or the pump cover 24 and the main housing 40 may be formed into an integral structure by injection molding. In the present application, two structural components are formed into an integral structure, which may mean that the two structural components are formed into an integral structure by injection molding or by other processes, which is not limited in the present application.

Further referring to FIG. 1 to FIG. 8, in order to control the drive component 1 in the drive assembly 100, in some embodiments, the fluid control apparatus 1 further includes a controller 15 and a connection terminal 16. The controller includes multiple electronic components, and the multiple electronic components may include a resistor, a capacitor, an inductor, an integrated circuit or the like. The controller 15 is located at the first accommodation cavity 101. At least part of the connection terminal 16 is located outside the first accommodation cavity 101. For example, as shown in FIG. 1 to FIG. 5, the connection terminal 16 is located on a side of the second housing 12 away from the first accommodation cavity 101, the connection terminal 16 and the second housing 12 are integrally formed by injection molding, the connection terminal 16 is electrically connected to the controller 15, and at least two drive components 13 are electrically connected to the controller 15. With the above arrangement, the at least two drive components 13 can be controlled by the controller 15, which saves space and reduces the cost of the drive assembly 100. Moreover, the connection terminal 16 can be used to be connected to an external electrical device , which simplifies the operation of the fluid control apparatus 1. In order to control multiple drive components by one controller 15, in some embodiments, at least part of the first stator assembly 130a, at least part of the second stator assembly 130b, at least part of the third stator assembly 130c, at least part of the first motor 132a, and at least part of the second motor 132b are located inside the first accommodation cavity 101, and the first stator assembly 130a, the second stator assembly 130b, the third stator assembly 130c, the first motor 132a, and the second motor 132b are electrically connected to the controller 15. The connection terminal 16 can be electrically connected to an external wiring harness structure, so that the controller 15 can control the motor to rotate, thereby rotating the valve core in the valve assembly. Further, the controller 15 can also control the on and off of the power supply of the stator assembly. When the controller 15 controls the stator assembly to be energized, the stator assembly generates a magnetic field, so that the rotor assembly is rotated under the action of the magnetic field, and the fluid flows in the first channel and the second channel under the action of the centrifugal force of the impeller assembly, thereby driving the fluid to flow in the valve assembly, and realizing reversal of the flow direction of the fluid and/or flow rate regulation of the fluid through the valve assembly.

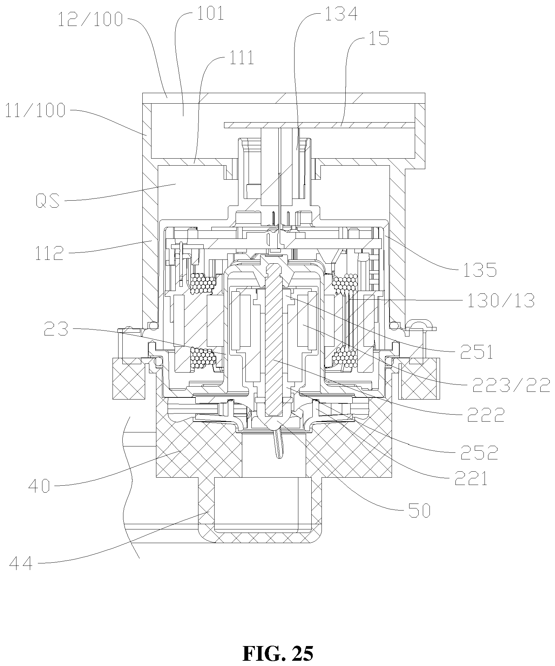

As shown in FIG. 25, the drive component including the stator assembly 130 is defined as a first drive component. The first drive component further includes a pump housing 135, a transition terminal 134 connected to the pump housing 135, and a connecting plate 136. The stator assembly 130 and the first housing 11 are separated from each other, and at least part of the stator assembly 130 and the connecting plate are both located inside the chamber of the pump housing 135. The pump housing 135 is sealingly connected to the first housing 11. For example, in FIG. 25, the pump housing 135 may be sealingly connected to the first housing 11 through a sealing ring, or the pump housing 135 and the limiting portion 112 of the first housing 11 may be formed into an integral structure by injection molding. The stator assembly 130 includes a coil winding 1303, and the coil winding 1303 is electrically connected to a pin in the transition terminal 134 through a conductive member in the connecting plate 136. Part of the transition terminal 134 passes through the bottom wall portion 111 and is located inside the first accommodation cavity 101. The transition terminal 134 is electrically connected to the controller 15. It should be noted that, in the present application, the drive component include a stator assembly 130 or a motor 132, and may further include a lead wire structure or a terminal structure of the stator assembly 130 or the motor 132 that is electrically connected to the controller 15.

Further referring to FIG. 1 to FIG. 26, in some embodiments, the fluid control apparatus 1 further includes a limiting assembly 50, and the limiting assembly 50 may be located at the fluid assembly 200. The pump assembly 20 includes a rotor assembly 22, a positioning shaft 222, and an isolation sleeve 23. At least part of the rotor assembly 22 is sleeved with the stator assembly 130, and the isolation sleeve 23 is arranged on part of the outer peripheral side of the rotor assembly 22. At least part of the isolation sleeve 23 is located between the stator assembly 130 and the rotor assembly 22. The positioning shaft 222 is arranged on the inner side of the rotor assembly 22. A first side of the positioning shaft 222 in the axial direction of the positioning shaft 222 is limited to the isolation sleeve 23. The limiting assembly 50 is arranged close to a second side of the positioning shaft 222 in the axial direction. The limiting assembly 50 and the rotor assembly 22 are arranged in a limited manner. For example, the limiting assembly 50 abuts against the rotor assembly 22. In the embodiment, the axial direction of the positioning shaft 222 is parallel or coincides with the height direction of the fluid control apparatus. With the above arrangement, both sides of the positioning shaft 222 in the axial direction can be limited, which reduces the axial movement of the positioning shaft 222 and thus reduces the axial movement of the rotor assembly 22, thereby reducing the noise of the pump assembly 20.

In some embodiments, the rotor assembly 22 includes a magnetic assembly 223 and an impeller assembly 221. At least part of the impeller assembly 221 and the magnetic assembly 223 are arranged along the axial direction of the rotor assembly 22. At least part of the magnetic assembly 223 is arranged on the inner surface side of the stator assembly 130, so that at least part of the magnetic assembly 222 can be located within the magnetic field range of the stator assembly 130. The isolation sleeve 23 includes an end wall portion 231, a connecting portion 232, and a peripheral wall portion 233. The extension direction of the end wall portion 231 intersects with the axial direction of the rotor assembly 22. The end wall portion 231 is arranged close to the first housing 11, and the peripheral wall portion 233 protrudes from the end wall portion 231. Along the radial direction of the rotor assembly 22, at least part of the peripheral wall portion 233 is located between the rotor assembly 22 and the stator assembly 130. Along the axial direction of the rotor assembly 22, at least part of the connecting portion 232 protrudes from the end wall portion 231 toward the rotor assembly 22. One side of the positioning shaft 222 is limited to the connecting portion 232, and the magnetic assembly 223 is located between the connecting portion 232 and the limiting assembly 50.

As shown in FIG. 26, in some embodiments, in the case that the pump assembly 20 further includes a pump cover 24, at least part of the pump cover 24 is located on the outer peripheral side of the impeller assembly 221, and at least part of the pump cover 24 is located inside the first chamber 401. At least part of the limiting assembly 50 is located at the pump cover 24. The limiting assembly 50 has a groove 521, and the end of the second side of the positioning shaft 222 is located in the groove 521 and abuts against a bottom wall portion of the groove 521. With the above arrangement, the isolation sleeve 23 is matched with the pump cover 24 to achieve an axial limit of the rotor assembly 22. Optionally, the pump cover 24 and the main housing 40 may be formed into an integral structure by injection molding; alternatively, the pump cover 24 and the main housing 40 may be separated from each other and limitedly connected with each other. In this case, a sealing ring is provided between the pump cover 24 and the main housing 40 to achieve the sealing of the two.

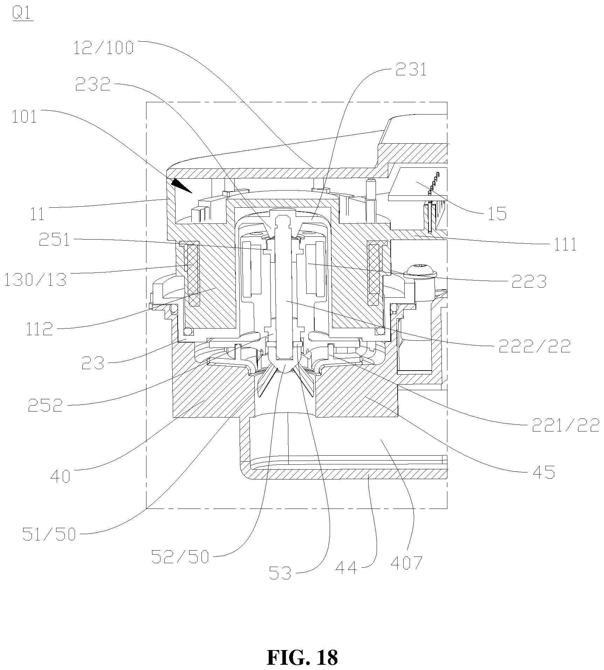

As shown in FIG. 18 to FIG. 25, in a case that the pump cover 24 and the main housing 40 are formed into an integral structure by injection molding, at least part of the impeller assembly 221 is located inside the first chamber 401. The main housing 40 includes a first duct 404 and a second duct 405 that are in communication with the first chamber 401. The impeller assembly 221 can be rotated to drive the fluid to flow between the first duct 404 and the second duct 405. The limiting assembly 50 includes a support portion 52 and at least two connecting ribs 51. The connecting ribs 51 are connected to a peripheral wall of the first duct 404, and the connecting ribs 51 are distributed on the outer peripheral side of the support portion 52. The support portion 52 is connected to the connecting ribs 51, and the groove 521 is located at the support portion 52. One end of the positioning shaft 222 is embedded in the groove 521. With the above arrangement, the fluid can flow in the first duct 404, and the positioning shaft 222 can be limited in the axial direction.

Alternatively, as shown in FIG. 26, in a case that the pump cover 24 and the main housing 40 are separated from each other, the pump assembly 20 has a pump chamber 201, a first channel 202, and a second channel 203. The pump cover 24 forms at least part of a wall portion of the pump chamber 201, and both the first channel 202 and the second channel 203 are in communication with the pump chamber 201. In a case that the limiting assembly 50 includes a support portion 52 and at least two connecting ribs 51, the connecting ribs 51 are connected to a peripheral wall of the first channel 202 of the pump cover 24, the connecting ribs 51 are distributed on the outer peripheral side of the support portion 52, and the support portion 52 is connected to the connecting ribs 51. The groove 521 is located at the support portion 52, and one end of the positioning shaft 222 is embedded in the groove 521.

In some embodiments, the rotor assembly 22 further includes a first bearing 251 and a second bearing 252. The first bearing 251 and the second bearing 252 are arranged along the axial direction of the rotor assembly 22. Along the axial direction of the rotor assembly 22, the first bearing 251 is located between the connecting portion 232 of the isolation sleeve 23 and the magnetic assembly 223, and the second bearing 252 is located between the magnetic assembly 223 and the limiting assembly 50. With the above arrangement, the rotations of the magnetic element 223 and the impeller assembly 221 in the rotor assembly 22 can be facilitated.

As shown in FIG. 26, in some embodiments, the limiting assembly 50 includes a first gasket 53 and a pump cover 24, where the first gasket 53 abuts between the second bearing 252 and the pump cover 24. Specifically, the pump cover 24 includes a support portion 52 and at least two connecting ribs 51, and the first gasket 53 abuts between the second bearing 252 and the support portion 52. With the above arrangement, the wear between the pump cover 24 and the second bearing 252 can be reduced. In a specific implementation, the positioning shaft 222 and the isolation sleeve 23 may be formed into an integral structure by injection molding, and/or the magnetic assembly 223, the impeller assembly 221, the first bearing 251, and the second bearing 252 may be formed into an integral structure by injection molding, so as to achieve stable connection between various structural components and simplify the assembling process of the fluid control apparatus.

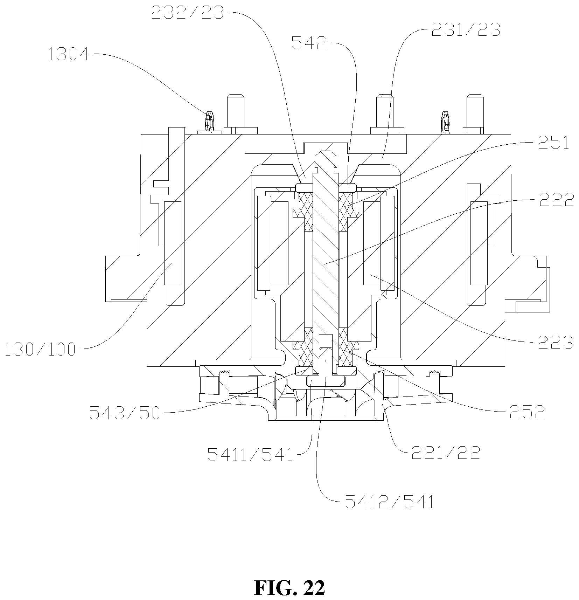

In other embodiments, as shown in FIG. 22, the limiting assembly 50 includes a first limiting component 541, a second gasket 542, and a third gasket 543. The first limiting component 541 is fixedly connected to the positioning shaft 222. Along the axial direction of the rotor assembly 22, the second gasket 542 abuts between the first bearing 251 and the connecting portion 232. The first limiting component 541 includes a first flange portion 5411 and a cylindrical portion 5412. Along the axial direction of the first limiting component 541, at least part of the orthographic projection of the cylindrical portion 5412 is located within the orthographic projection of the first flange portion 5411, and the third gasket 543 is limited between the first flange portion 5411 and the second bearing 252. With the above arrangement, when an electric pump device 20 is assembled with the main housing 40, an impeller assembly 221 of the electric pump device 20 may be arranged downwards (in the up-down direction in the drawing). In this way, the structures, such as the impeller assembly 221, are limited by the limiting assembly 50, which facilitates the assembly of the electric pump device 20 with the main housing 40. In the embodiment, the positioning shaft 222 and the isolation sleeve 23 may be formed into an integral structure by injection molding, and/or the magnetic assembly 223, the impeller assembly 221, the first bearing 251, and the second bearing 252 may be formed into an integral structure by injection molding, so as to achieve stable connection of various structural components and simplify the assembling process of the fluid control apparatus.

In order to achieve a fastening connection between the first limiting component 541 and the positioning shaft 222, in some embodiments, the first limiting component 541 has a first threaded portion, and the first threaded portion is located at the cylindrical portion 5412. The positioning shaft 222 has a second threaded portion, and the first threaded portion is threadedly connected to the second threaded portion. Alternatively, the first limiting component 541 and the positioning shaft 222 may be connected by riveting.

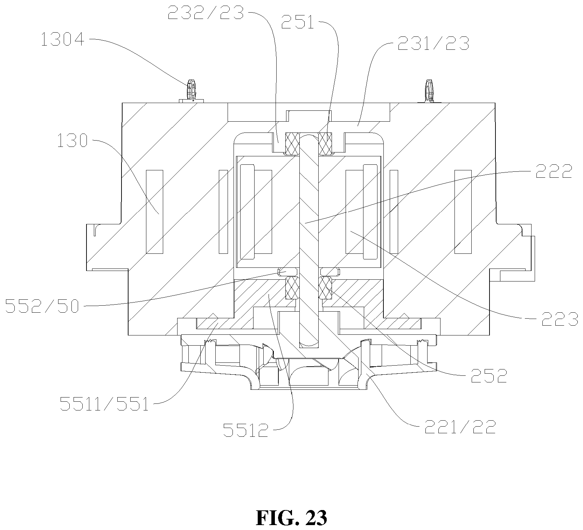

In other embodiments, as shown in FIG. 23, at least part of the first bearing 251 is sleeved between the outer peripheral side of the positioning shaft 222 and the connecting portion 232 of the isolation sleeve 23. Along the axial direction of the rotor assembly 22, the limiting assembly 50 is located between the magnetic assembly 223 and the impeller assembly 221. The limiting assembly 50 includes a second limiting component 551 and a fourth gasket 552. The second limiting component 551 is limited to the isolation sleeve 23 and is sealingly connected to the isolation sleeve 23, for example, the second limiting component 551 is welded to the isolation sleeve 23. The second limiting component 551 is located on a side of the magnetic assembly 223 away from the connecting portion 232. The second bearing 252 is sleeved between the outer peripheral side of the positioning shaft 222 and the second limiting component 551. Along the axial direction of the rotor assembly 22, the fourth gasket 552 abuts between the second bearing 252 and the magnetic assembly 223. Specifically, the second limiting component 551 includes a second flange portion 5511 and a second cylindrical portion 5512. Along the axial direction of the second limiting component 551, at least part of the orthographic projection of the second cylindrical portion 5512 is located within the orthographic projection of the second flange portion 5511, and the second flange portion 5511 is sealingly connected to the isolation sleeve 23. In a specific implementation, in the embodiment, the positioning shaft 222 and the magnetic assembly 223 may be formed into an integral structure by injection molding, the isolation sleeve 23 and the first bearing 251 may be formed into an integral structure by injection molding, and the impeller assembly 221 is assembled with and connected to the positioning shaft 222. With the above arrangement, the rotor assembly 22 can be axially limited.

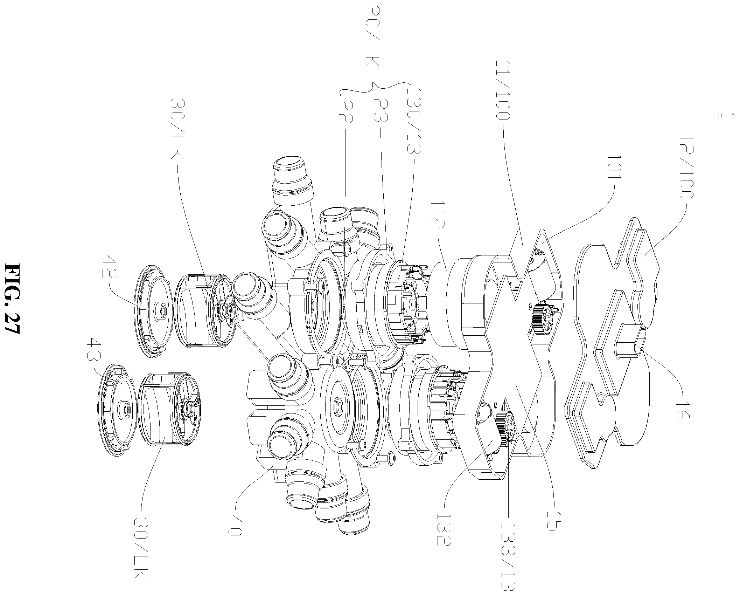

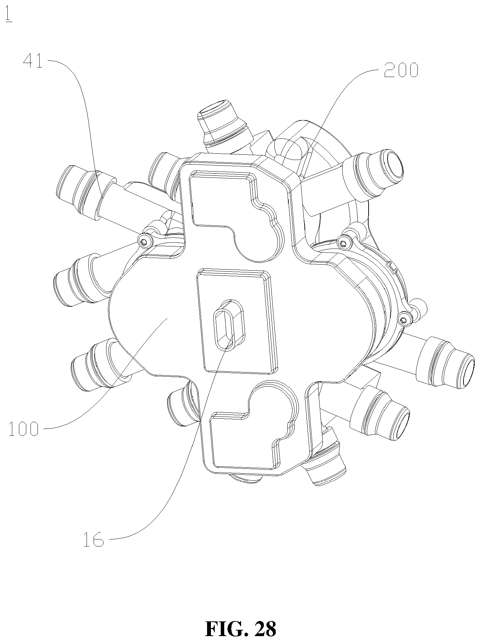

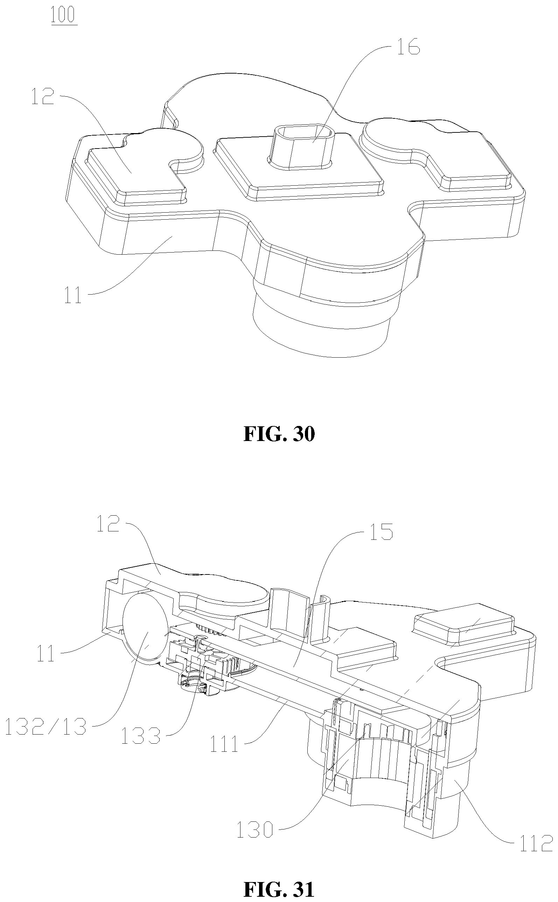

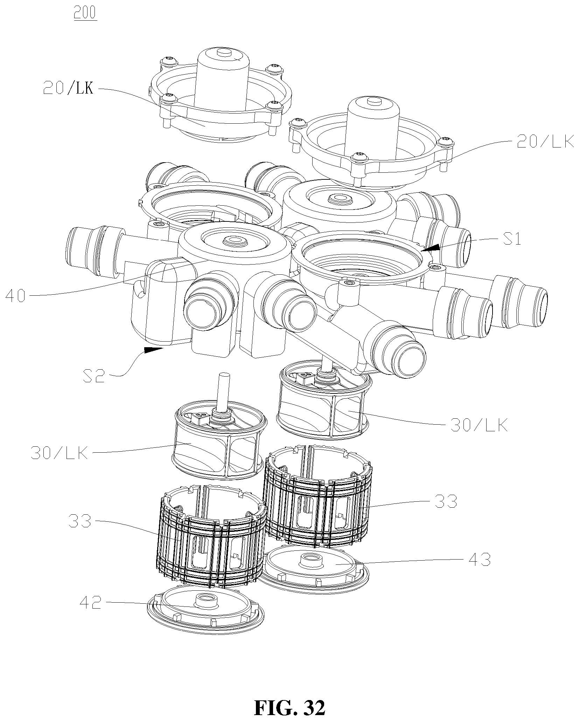

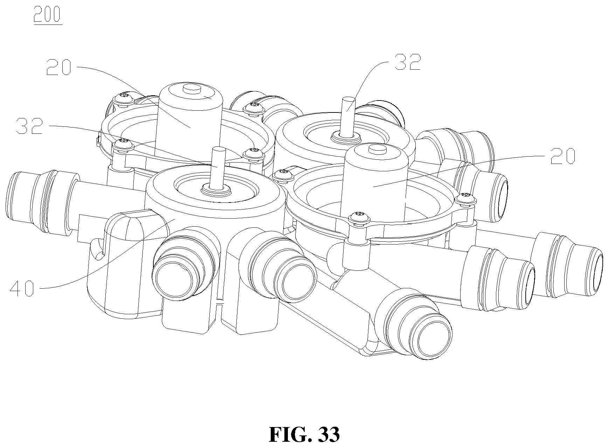

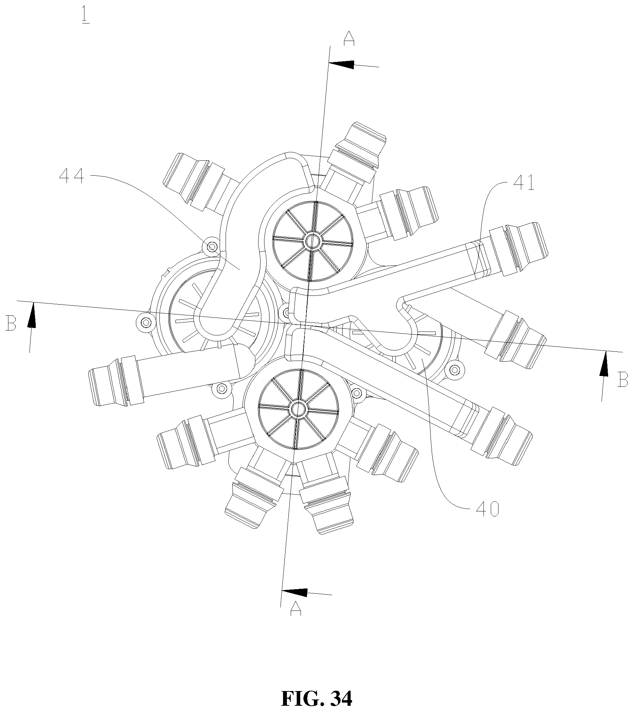

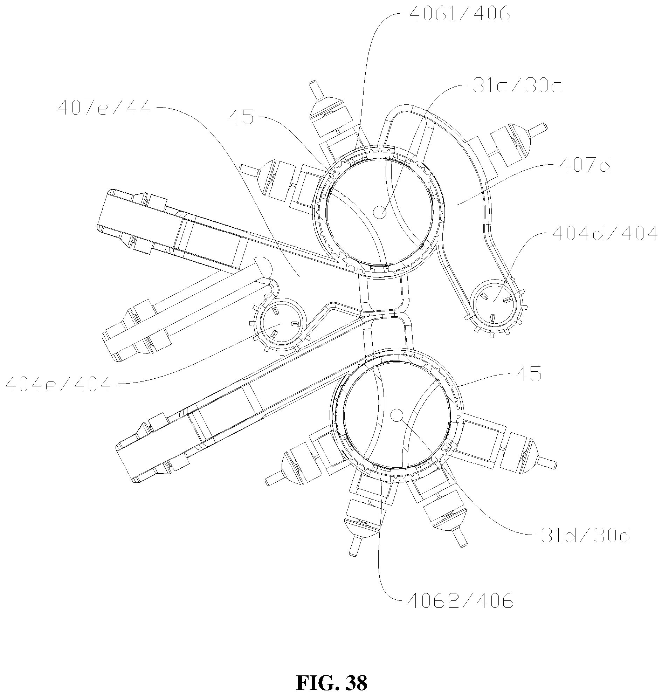

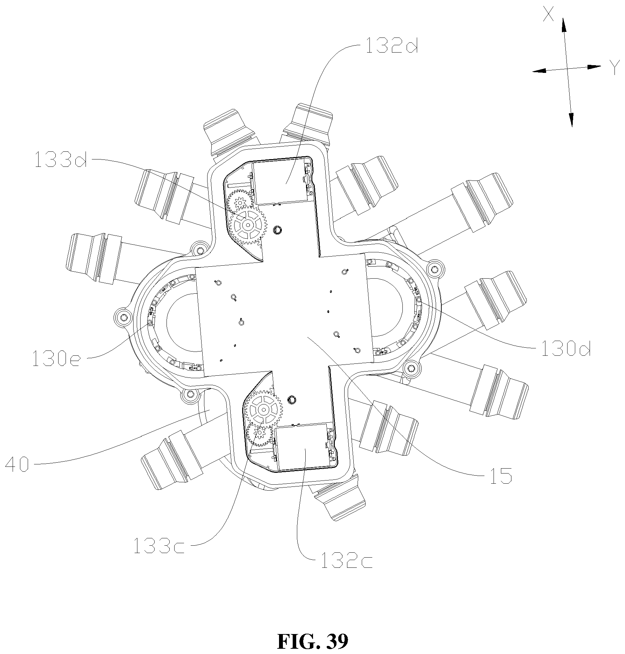

Further, as shown in FIG. 27 to FIG. 44, a fluid control apparatus 1 is provided according to another embodiment of the present application. The structure of the fluid control apparatus 1 is similar to the structure of the fluid control apparatus shown in FIG. 1 to FIG. 26. The arrangement of the first housing 11, the stator assembly 130, the rotor assembly 22, the isolation sleeve 23, the positioning shaft 222, and the main housing 40 is the same or similar to the arrangement shown in FIG. 1 to FIG. 26. The difference between the fluid control apparatuses according to the two embodiments is at least in that: the number of the drive components 13 included in the drive assembly 100 is four, where each of two of the four drive components includes a stator assembly, and each of the other two of the four drive components includes a motor. In this embodiment of the present application, the number of the fluid sub-assemblies LK is four, where each of two of the four fluid sub-assemblies LK includes a pump assembly 20, and each of the other two of the four fluid sub-assemblies LK includes a valve assembly 30.

For the drive assembly 100, referring to FIG. 18 to FIG. 26, FIG. 29 to FIG. 31, and FIG. 34 to FIG. 36, the drive assembly 100 further includes a first housing 11 and a second housing 12, and the drive assembly 100 has a first accommodation cavity 101. The first housing 11 and the second housing 12 form at least part of a wall portion of the first accommodation cavity 101. In the embodiment, the second housing 11 includes a top cover portion, and the top cover portion and the bottom wall portion 111 are arranged opposite to each other along the height direction of the drive assembly 100. The first housing 11 and the second housing 12 are joined by snap-fitting to form the first accommodation cavity 101. At least part of at least two drive components 13 are located inside the first accommodation cavity 101, so that the at least two drive components 13 are integrated into the drive assembly 100. Compared with the case that multiple drive assemblies are separated from each other, the number of lead wires can be reduced, and the space occupied by the drive assembly 100 can be reduced. Optionally, all of the drive components 13 may be limitedly connected to the first housing 11, or some of the drive components 13 may be limitedly connected to the first housing 11, which is not limited in the present application.

In the drive assembly 100, the first housing 11 includes a bottom wall portion 111, a limiting portion 112, and a peripheral side wall 113. The peripheral side wall 113, the bottom wall portion 111, and the limiting portion 112 are connected. For example, the peripheral side wall 113, the bottom wall portion 111, and the limiting portion 112 may be fixed as an integral structure by injection molding, or may be fixedly connected by welding, or may be limitedly connected by a fastener or the like. At least part of the limiting portion 112 protrudes from the bottom wall portion 111 along the height direction of the drive assembly 100. The bottom wall portion 111 and the peripheral side wall 113 form part of a wall portion of the first accommodation cavity 101. At least one drive component 13 includes a stator assembly 130, and the drive component including the stator assembly 130 is defined as a first drive component. At least part of the first drive component is limitedly connected in the limiting portion 112. At least part of the stator assembly 130 included in the first drive component is located in the limiting portion 112; or, the first drive component may further include a pump housing, and at least part of the stator assembly 130 is located inside a chamber of the pump housing, for example, the stator assembly 130, as an insert, may be fixed to the pump housing by injection molding or the stator assembly 130 may be assembled into the chamber of the pump housing. In this case, at least part of the pump housing or at least part of the whole formed by the pump housing and the stator assembly 130 is located in the limiting portion 112. At least part of the first drive component is limitedly connected in the limiting portion 112, so that at least two stator assemblies 130 can be integrated in one drive assembly 100. Compared with the case of providing multiple driving devices, the fluid control apparatus according to the embodiment of the present application can reduce the space occupied by the drive assembly 100 and improves the integration degree of the drive assembly 100.

In the embodiment, the number of the drive components 13 in the drive assembly 100 is four, and gaps exist among the orthographic projections of the four drive components 13 along the height direction of the drive assembly 100. Each of two of the four drive components 13 includes a stator assembly 130. The two stator assemblies 130 may be respectively connected to the corresponding limiting portions 112 in a limited manner, and respectively located inside the corresponding limiting portions 112. Alternatively, in some other embodiments, one of the drive components 13 of the drive assembly 100 includes a stator assembly 130, and another of the drive components may be a motor or the like, thereby achieving the integration of different types of drive components 13.

In order to facilitate limiting the stator assembly 130, in some embodiments, at least part of the limiting portion 112 extends from the bottom wall portion 111 in a direction away from the first accommodation cavity 101. In this case, at least part of the limiting portion 112 extends from the bottom wall portion 111 towards the fluid assembly, and at least part of the limiting portion 112 protrudes from the bottom wall portion 111 in a direction away from the second housing 12. Optionally, the stator assembly 130 may be fixed to the limiting portion 112 by injection molding. In the present application, being fixed by injection molding refers to being formed into an integral structure by injection molding. Specifically, the stator assembly 130, used as an insert, and the first housing 11 are integrally formed by injection molding, so that the stator assembly 130 and the limiting portion 112 can be formed into an integral structure by injection molding. In this case, an electrical connection wire may be lead out from the stator assembly 130 during injection molding, and the stator assembly 130 can be electrically connected to the controller through the electrical connection wire. Alternatively, the limiting portion 112 includes a mounting cavity QS, at least part of the stator assembly 130 is located inside the mounting cavity QS, and the stator assembly 130 is limitedly connected to the first housing 11 by a fastener or the like. With the above arrangement, the stator assembly 130 and the limiting portion 112 can be limitedly arranged with each other. In the case that at least two drive components 13 include respective stator assemblies 130, all of the stator assemblies 130 and the limiting portion 112 may be formed into an integral structure by injection molding, or, all of the stator assemblies 130 may be assembled into the mounting cavity QS formed by the limiting portion 112, or, some of the stator assemblies 130 and the limiting portion 112 may be formed into an integral structure by injection molding, and some of the stator assemblies 130 and the limiting portion 112 may be formed into an integral structure by injection molding.

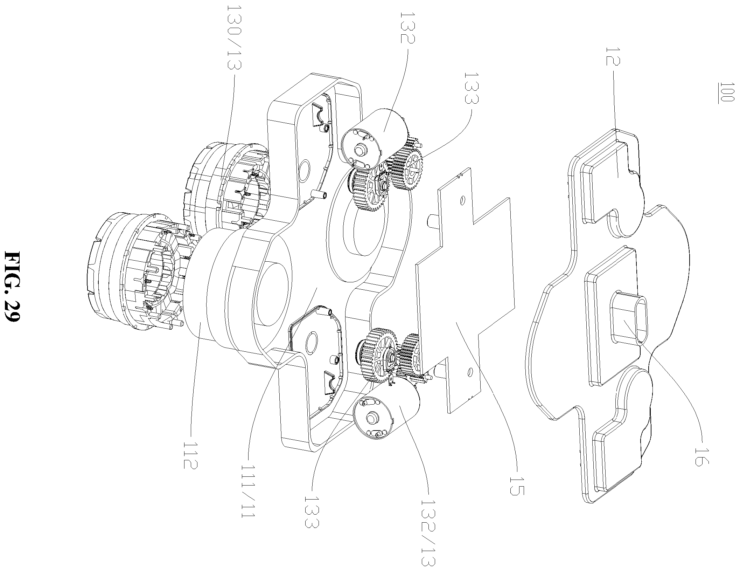

Alternatively, as shown in FIG. 29, in order to implement the functions of the drive components, in the embodiment of the present application, the drive assembly further includes a controller 15. The controller 15 may be a circuit board. The drive component including the stator assembly 130 is defined as a first drive component, and the first drive component further includes a pump housing 135, a transition terminal 134 connected to the pump housing 135, and a connecting plate 136. The stator assembly 130 and the first housing 11 are separately arranged. In this case, the stator assembly 130 is assembled into the mounting cavity QS formed by the limiting portion 112. At least part of the stator assembly 130 and the connecting plate 136 are located in the chamber of the pump housing 135. The pump housing 135 is sealingly connected to the first housing 11, for example, the pump housing 135 may be sealingly connected to the first housing 11 through a sealing ring, or the pump housing 135 and the limiting portion 112 of the first housing 11 are formed into an integral structure by injection molding. The stator assembly 130 includes a coil winding 1303, and the coil winding 1303 is electrically connected to a pin in the transition terminal 134 through a conductive member in the connecting plate 136. Part of the transition terminal 134 passes through the bottom wall portion 111 and is located in the first accommodation cavity 101. The transition terminal 134 is electrically connected to the controller 15. It should be noted that, in the present application, the drive component includes a stator assembly 130 or a motor 132, the drive component may further include a lead wire structure or a terminal structure, and the lead wire structure or the terminal structure can electrically connect the controller 15 to the stator assembly 130 or the motor 132.

In order to realize the electrical connection between the stator assembly 130 and the controller 15, a metal conductive structure may be provided in the first housing 11. The metal conductive structure and the first housing 11 may be formed into an integral structure by injection molding, so that the metal conductive structure is pre-embedded in the first housing 11. An Insulation Displacement Connector (IDC) may be used as an output terminal 1304 of the stator assembly 130, so that the stator assembly 130 can be electrically connected to the controller 15 through a pin of the IDC.

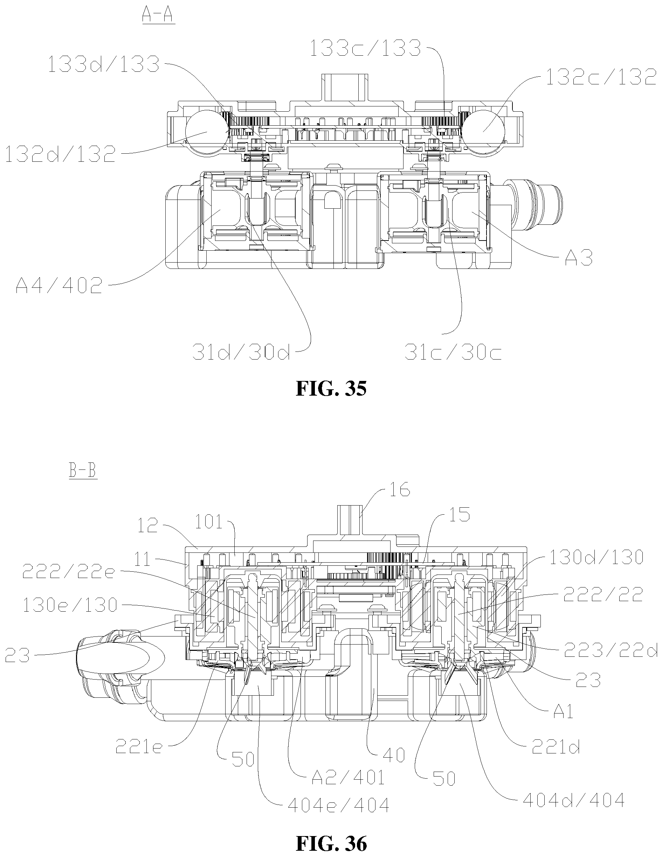

In some embodiments, as shown in FIG. 36, the fluid control apparatus may further include an isolation sleeve 23, and part of the isolation sleeve 23 is located on the inner peripheral side of the stator assembly 130. Optionally, the isolation sleeve 23 and the first housing 11 may be formed into an integral structure by injection molding. In this case, the stator assembly 130 and the limiting portion 112 may be formed into an integral structure by injection molding, or the stator assembly 130 is located inside the mounting cavity QS of the limiting portion 112. Alternatively, as shown in FIG. 19 to FIG. 24, the isolation sleeve 23 and the stator assembly 130 is formed into an integral structure by injection molding or at least part of the stator assembly 130 is located in the chamber formed by the isolation sleeve 23. In this case, a whole formed by the isolation sleeve 23 and the stator assembly 130 is separated from the first housing 1, and is sealingly connected to the first housing 1. A sealing ring is provided between the first housing 11 and the whole structure formed by the isolation sleeve 23 and the stator assembly 130, and the sealing between the whole structure and the first housing 11 is achieved by clamping the sealing ring. With the above arrangement, the limiting arrangement and the sealing connection between the isolation sleeve 23 and the first housing 11 can be achieved.

In a specific implementation, in a case that the stator assembly 130 and the limiting portion 112 are formed into an integral structure by injection molding, the isolation sleeve 23 and the first housing 11 may be formed into an integral structure by injection molding, or the isolation sleeve 23 and the first housing 11 may be separated from each other and sealingly connected to each other. When the stator assembly 130 is assembled into the mounting cavity QS of the limiting portion 112, the isolation sleeve 23 and the first housing 11 may be formed into an integral structure by injection molding, or, the isolation sleeve 23 and the first housing 11 may be separated from each other and sealingly connected to each other, or, the isolation sleeve 23 and the stator assembly 130 are formed into an integral structure by injection molding and the whole formed by the isolation sleeve 23 and the stator assembly 130 is separated from the first housing 11 and is sealingly connected to the first housing 11. In the case that the number of the stator assemblies 130 is at least two, the limit connection manners between different stator assemblies 130 and the first housing 11 may be the same or different, and the connection manners between the isolation sleeves 23 corresponding to the different stator assemblies 130 and the first housing 11 may also be the same or different.

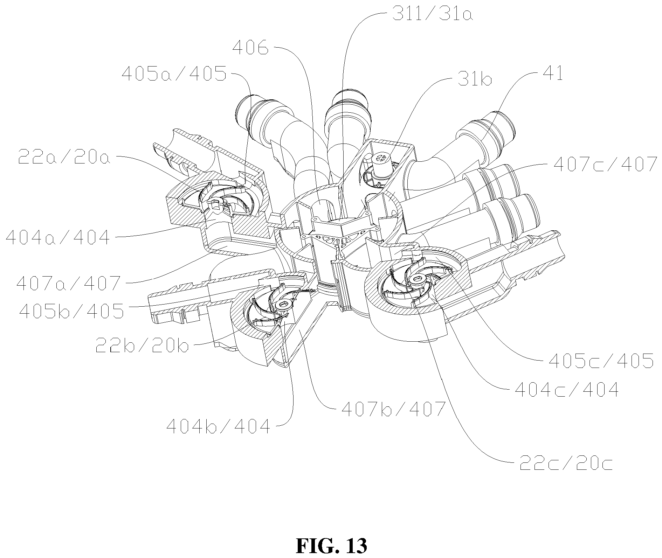

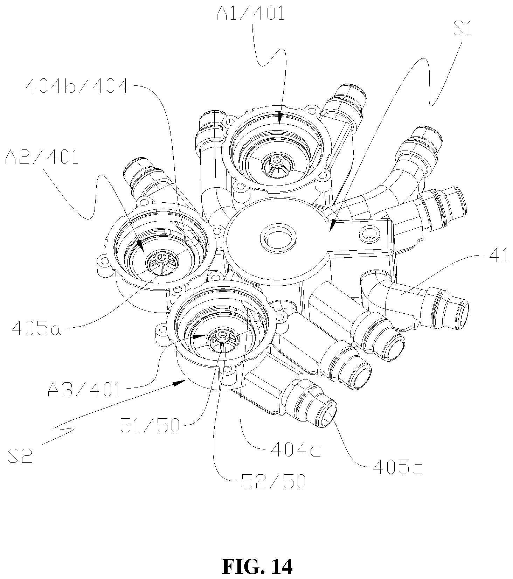

As shown in FIG. 25, the drive component including the stator assembly 130 is defined as a first drive component. The first drive component further includes a pump housing 135, a transition terminal 134 connected to the pump housing 135, and a connecting plate 136. The stator assembly 130 and the first housing 11 are separately arranged, and at least part of the stator assembly 130 and the connecting plate are located inside the chamber of the pump housing 135. The pump housing 135 is sealingly connected to the first housing 11. For example, in FIG. 13, the pump housing 135 may be sealingly connected to the first housing 11 through a sealing ring, or as shown in FIG. 14, the pump housing 135 and the limiting portion 112 of the first housing 11 are formed into an integral structure by injection molding. The stator assembly 130 includes a coil winding 1303, and the coil winding 1303 is electrically connected to a pin in the transition terminal 134 through a conductive member in the connecting plate 136. Part of the transition terminal 134 passes through the bottom wall portion 111 and is located inside the first accommodation cavity 101. The transition terminal 134 is electrically connected to the controller 15. It should be noted that, in the present application, the drive component includes the stator assembly 130 or the motor 132, and may further include a lead wire structure or a terminal structure electrically connecting the stator assembly 130 or the motor 132 to the controller 15.

For the fluid assembly 200, the fluid assembly 200 includes a main housing 40. The main housing 40 includes chamber housings 45 and a flow channel plate 44. The flow channel plate 44 may be connected between two chamber housings 45. The main housing 40 has a first chamber 401, a second chamber 402, a first duct 404, a second duct 405, multiple flow channels 406, and a communication channel 407. The first duct 404 and the second duct 405 are both in communication with the first chamber 401. At least part of the pump assembly 20 is located inside the first chamber 401, and at least part of the valve assembly 30 is located inside the second chamber 402. The first duct 404 corresponding to a pump assembly 20 is in communication with one of the flow channels 406 located on the outer peripheral side of a valve assembly 30.

In order to enable the fluid to flow in the fluid control apparatus 1, in some embodiments, at least part of the main housing 40 is located on a side of the first housing 11 away from the first accommodation cavity 101. As shown in FIG. 27. At least part of the main housing 40 is located on the side of the first housing 11 away from the second housing 12. The main housing 40 further includes connecting pipes 41, and the connecting pipes 41 may be arranged along the circumferential direction of the main housing 40 or may be integrated on at least one mounting surface.

In the embodiment of the present application, the pump assembly 20 includes a rotor assembly 22, and the isolation sleeve 23 of the fluid control apparatus is sleeved on the outer peripheral side of the rotor assembly 22. By providing the isolation sleeve 23, the stator assembly 130 can be isolated from the corresponding rotor assembly 22, which prevents the working fluid from entering the space where the stator assembly 130 is located. The rotor assembly 22 includes an impeller assembly 221 and a magnetic assembly 223. The pump assembly 20 further includes a positioning shaft 222. The impeller assembly 221 is sleeved on the outer peripheral side of the positioning shaft 222, and at least part of the impeller assembly 221 may be located inside the first chamber 401. At least part of the first duct 404 and the impeller assembly are arranged along the height direction of the pump assembly 20. The position of the second duct 405 corresponds to the position of the impeller assembly 221. Optionally, at least part of a wall portion of the first duct 404 may be coaxially arranged with the rotating shaft of the impeller assembly 221. The mouth of the second duct 405 is located at the edge of the impeller assembly 221 in the circumferential direction of the impeller assembly 221, and the fluid can enter the impeller assembly 221 from the first duct 404. Under the centrifugal force of the impeller assembly 221, the fluid is discharged from the second duct 405. In this case, the first duct 404 may be used as an inlet duct of the pump assembly 20, and the second duct 405 may be used as an outlet duct of the pump assembly 20.

In some embodiments, the main housing 40 has a flow channel plate 44 and a chamber housing 45. The chamber housing 45 and the flow channel plate 44 are formed into an integral structure by injection molding. The first chamber 401, the second chamber 402, and the flow channels 406 are located at the chamber housing 45, and the communication channel 407 is located at the flow channel plate 44. At least part of the flow channel plate 44 is connected between two fluid sub-assemblies LK. For example, the flow channel plate 44 may be connected between the pump assembly 20 and the valve assembly 30, or the flow channel plate 44 may be connected between two valve assemblies 30. In the embodiment of the present application, the flow channel plate 44 and the chamber housing 45 are integrally formed, which reduces the pipeline connections of the chamber housings 45 and improves the integration degree of the fluid control apparatus. Furthermore, multiple flow channels 406 are distributed on the outer peripheral side of the second chamber 402. One flow channel 406 is in communication with one of the first duct 404 and the second duct 405 through one communication channel 407. The valve core 30 includes a communication cavity 31, and the communication cavity 31 can communicate at least two flow channels 406. The flow channel 406 is in communication with the first duct 404 or the second duct 405 through the communication channel 407, and the extension direction of the communication channel 407, the extension direction of the flow channel 406, and the extension direction of the first duct 404 or the second duct 405 intersect.

Optionally, the pump assembly 20 may further include a pump cover 24, and the pump cover 24 is sealingly connected to the isolation sleeve 23. Specifically, the pump cover 24 may be welded to the isolation sleeve 23, and the rotor assembly 22 is located in a space formed between the pump cover 24 and the isolation sleeve 23. The pump cover 24 has a first port 241 and a second port 242. The rotor assembly 22 can drive the fluid to flow between the first port 241 and the second port 242. At least part of the pump cover 24 is located in the first chamber 401 and the pump cover 24 is sealingly connected to the main housing 40. The first port 241 is in communication with the first duct 404, and the second port 242 is in communication with the second duct 405. In a specific implementation, the pump assembly 20 has a pump chamber 201, a first channel 202, and a second channel 203. The pump cover 24 forms at least part of a wall portion of the pump chamber 201. The first channel 202 and the second channel 203 may be located at the pump cover 24. The first port 241 is located at the first channel, and the second port 242 is located at the second channel. At least part of the first channel 202 is located in the first duct 404, and at least part of the second channel 203 is located in the second duct 405.

In order to achieve the sealing connection between the pump cover 24 and the main housing 40, in some embodiments, as shown in FIG. 26, a sealing ring may be sandwiched between the pump cover 24 and the main housing 40, or the pump cover 24 and the main housing 40 are formed into an integral structure by injection molding. In the present application, two structural components are formed into an integral structure, which means that the two structural components may be formed into an integral structure by injection molding or by other processes, which is not limited in the present application.

In order to facilitate the flow of the fluid in the main housing 40, in some embodiments, the first chamber 401 includes a first sub chamber A1 and a second sub chamber A2, and the second chamber 402 includes a third sub chamber A3 and a fourth sub chamber A4. Two pump assemblies are defined as a first pump assembly 20d and a second pump assembly 20e, and two valve assemblies are defined as a first valve assembly 30c and a second valve assembly 30e. At least part of the first pump assembly 20d is located inside the first sub chamber A1, at least part of the second pump assembly 20e is located inside the second sub chamber A2, at least part of the first valve assembly 30c is located inside the third sub chamber A3, and at least part of the second valve assembly 30d is located inside the fourth sub chamber A4. The first sub chamber A1 and the second sub chamber A2 are both in communication with the third sub chamber A3. With the above arrangement, fluid interaction between the two pump assemblies and one of the valve assemblies can be achieved in the main housing 40.

The first chamber 401 and the second chamber 402 have ports located at a surface of the main housing 40. In order to facilitate the assembly of the pump assembly 20 and the valve assembly 30, a first mounting port of the first chamber 401 and a second mounting port of the second chamber 402 are located at different surfaces of the main housing 40. As shown in FIG. 27, the port of the first chamber 401 and the port of the second chamber 402 are located on opposite sides of the main housing 40 in the height direction of the main housing 40. In this case, the main housing 40 includes a chamber housing 45 and a bottom cover, and the chamber housing 45 and the bottom cover may be sealingly connected to each other by welding or other processes.

In some embodiments, the chamber housing 45 includes a chamber housing side wall and a chamber housing top wall. Part of the chamber housing side wall and the chamber housing top wall form at least part of a wall portion of the first chamber 401. The chamber housing side wall and the chamber housing top wall are formed as an integral structure, and the chamber housing top wall and the first mounting port are located on the same side of the main housing 40. With the above arrangement, the assembly error between the valve assembly 30 and the corresponding drive component 13 can be reduced, the strength of the chamber housing 45 can be improved, and the drive components corresponding to the valve assembly 30 and the pump assembly 20 can be located on the same side of the main housing 40.

In a specific implementation, the main housing 40 includes a first end portion S1 and a second end portion S2, and the first end portion S1 and the second end portion S2 are arranged opposite to each other along the height direction of the main housing 40. The first mounting port of the first chamber 401 is located at the first end portion S1, the second mounting port of the second chamber 402 is located at the second end portion S2, and the drive assembly 100 is located on a side of the first end portion S1 away from the second end portion S2. With the above arrangement, the pump assembly 20 can be assembled with the main housing 40 on one side of the main housing 40, and the valve assembly 30 can be assembled with the main housing 40 from the other side of the main housing 40, so that the drive component for driving the pump assembly 20 and the drive component for driving the valve assembly 30 can be arranged on the same side, which is convenient for the integration of multiple drive components. In a case that the number of the valve assemblies 30 is at least two, all of the valve assemblies 30 may be mounted from the same side of the main housing 40 to unify the assembling reference. Then, all of the pump assemblies 20 may be mounted from the other side of the main housing 40 to reduce assembly error, thereby achieving the coaxiality between at least two valve assemblies 30 and the corresponding drive components 13. It can be understood that the first mounting port of the first chamber 401 and the second mounting port of the second chamber 402 may be arranged on the same side of the main housing 40, so that the pump assembly 20 and the valve assembly 30 can be assembled on the same side of the main housing, which is not limited in the present application.

In the embodiments of the present application, the structures of the valve cores in two valve assemblies 30 are similar, and the two valve assemblies 30 include a first valve assembly 30c and a second valve assembly 30d. One of the valve cores is defined as a first valve core 31c, and the other of the valve cores is defined as a second valve core 31d. The number of the flow channels 406 located on the outer peripheral side of the first valve core 31c may be at least five, and the number of the flow channels 406 located on the outer peripheral side of the second valve core 31d may be at least five. Furthermore, one of the pump assemblies 20 is defined as a first pump assembly 20d, and the other of the pump assemblies 20 is defined as a second pump assembly 20e. A first duct 404d corresponding to the first pump assembly 20d and a first duct 404e corresponding to the second pump assembly 20e are both in communication with the third sub chamber A3 through the communication channel 407. The flow channels 406 located on the outer peripheral side of the first valve core 31c are defined as first flow channels 4061, and the first flow channels 4061 are located at a side wall portion of the third sub chamber A3. The flow channels 406 located on the outer peripheral side of the second valve core 31d are defined as second flow channels 4062, and the second flow channels 4062 are located at a side wall portion of the fourth sub chamber A4. In this embodiment, the number of the first flow channels 4061 is five, and the number of the second flow channels 4062 is five. The number of the first flow channels 4061 and the number of the second flow channels 4062 may also be set according to the requirements of the user, for example, may be three, four, six, seven or more. The number of the first flow channels 4061 and the number of the second flow channels 4062 may be the same or different. With the above arrangement, one pump assembly 20 and one valve assembly 30 can cooperate with each other to achieve control of the fluid.

In order to facilitate the integration of the drive components of the pump assemblies and the drive components of the valve assemblies, in some embodiments, along the height direction of the fluid control apparatus, sides of the first pump assembly 20d and the second pump assembly 20e away from the main housing 40 are located at the same height, which facilitates the assembly and mounting of the pump assemblies and the corresponding stator assemblies. Part of the valve assembly 30 and part of the part of the pump assembly 20 are located at the same height, so as to reduce the axial height of the fluid control apparatus. Specifically, part of the first valve assembly 30c, part of the first pump assembly 20d and part of the second pump assembly 20e may be located at the same height.

Furthermore, in some embodiments, the main housing 40 further includes a first communication channel 407d and a second communication channel 407e. The first communication channel 407d communicates the first sub chamber A1 with the third sub chamber A3, and the second communication channel 407e communicates the second sub chamber A2 with the third sub chamber A3. At least part of the first communication channel 407d and at least part of the second communication channel 407e are spaced apart along the circumferential direction of the wall portion of the third sub chamber A3.

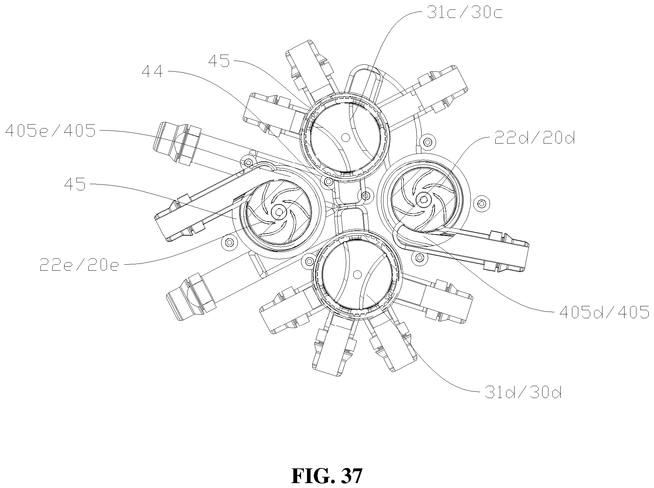

In order to better realize the fluid interaction between the pump assembly 20 and the valve assembly 30, as shown in FIG. 36 and FIG. 37, the main housing 40 includes a first duct 404 and a second duct 405. The first duct 404 may be an inlet duct of the pump assembly 20, and the second duct 405 may be an outlet duct of the pump assembly 20. In this embodiment, the first duct 404 includes a first sub duct 404d and a second sub duct 404e, and the second duct 405 includes a third sub duct 405d and a fourth sub duct 405e. The first sub duct 404d and the third sub duct 405d are both in communication with the first sub chamber A1, and the second sub duct 404e and the fourth sub duct 405e are both in communication with the second sub chamber A2. The first pump assembly 20d includes a first impeller assembly 221d, the second pump assembly 20e includes a second impeller assembly 221e. At least part of a wall portion of the first sub duct 404d is coaxially arranged with the rotation axis of the first impeller assembly 221d, and at least part of a mouth of the third sub duct 405d is located at an edge of the first impeller assembly 221d in the circumferential direction. At least part of a wall portion of the second sub duct 404e is coaxially arranged with the rotation axis of the second impeller assembly 221e, and at least part of a mouth of the fourth sub duct 405e is located at an edge of the second impeller assembly 221e in the circumferential direction. The first sub duct 404d is in communication with the third sub chamber A3 through the first communication channel 407d, and the second sub duct 404e is in communication with the third sub chamber A3 through the second communication channel 407e.

As shown in FIG. 27 to FIG. 44, the first valve core 31c includes at least three communication cavities. The communication cavities of the first valve core 31c can communicate at least two first flow channels 4061 and can isolate at least one first flow channel 4061. The communication cavity of the second valve core 31d can communicate at least two second flow channels 4062 and can isolate at least one second flow channel 4062. With the above arrangement, multiple operation modes of the fluid control apparatus can be implemented. The term "isolation of a flow channel" herein means that the flow channel is not in communication with any other flow channels through a corresponding valve core.

The operation modes of the first valve assembly 30c are introduced below. The first flow channels corresponding to the first valve assembly 30c are defined as a first sub flow channel P1, a second sub flow channel P2, a third sub flow channel P3, a fourth sub flow channel P4, and a fifth sub flow channel P5. The second sub flow channel P2 is in communication with the duct corresponding to the first pump assembly 20d, and the fourth sub flow channel P4 is in communication with the duct corresponding to the second pump assembly 20e. By adjusting the positions of the multiple first flow channels on the wall portion of the corresponding third sub chamber A3 and adjusting the opening angles among the three communication cavities of the first valve core 31c, the first valve assembly 30c according to the embodiment of the present application has at least one of the following operation modes.

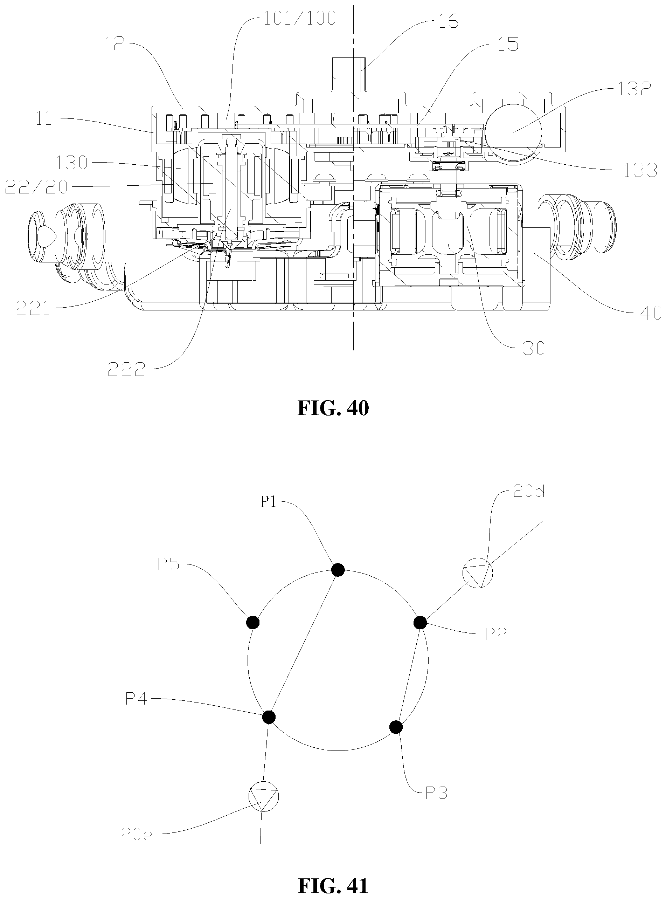

In a first operation mode, as shown in FIG. 41, the first valve core 31c is located at a first position. One of the communication cavities of the first valve core 31c communicates the first sub flow channel P1 with the fourth sub flow channel P4, another of the communication cavities communicates the second sub flow channel P2 with the third sub flow channel P3, and another of the communication cavities isolates the fifth sub flow channel P5.

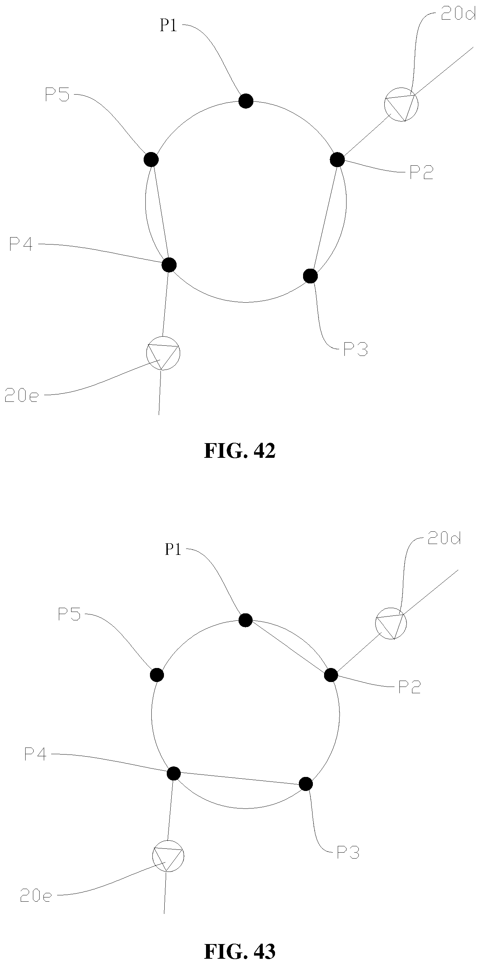

In a second operation mode, as shown in FIG. 42, the first valve core 31c is located at a second position. One of the communication cavities of the first valve core 31c communicates the fifth sub flow channel P5 with the fourth sub flow channel P4, another of the communication cavities communicates the second sub flow channel P2 with the third sub flow channel P3, and another of the communication cavities isolates the first sub flow channel P1.

In a third operation mode, as shown in FIG. 43, the first valve core 31c is located at a third position. One of the communication cavities of the first valve core 31c communicates the third sub flow channel P3 with the fourth sub flow channel P4, another of the communication cavities communicates the second sub flow channel P2 with the first sub flow channel P1, and another of the communication cavities isolates the fifth sub flow channel P5.

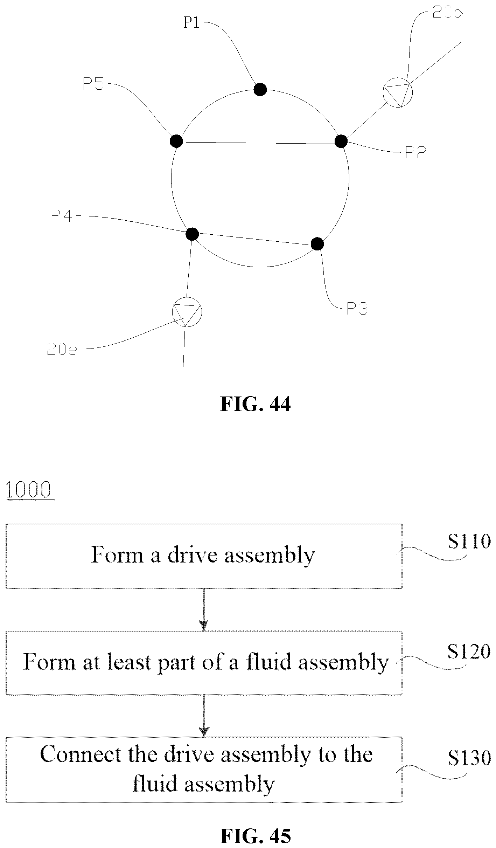

In a fourth operation mode, as shown in FIG. 44, the first valve core 31c is located at a fourth position. One of the communication cavities of the first valve core 31c communicates the third sub flow channel P3 with the fourth sub flow channel P4, another of the communication cavities communicates the second sub flow channel P2 with the fifth sub flow channel P5, and another of the communication cavities isolates the first sub flow channel P1.

In the embodiment of the present application, operation modes corresponding to the second valve assembly 30d for communicating the second flow channels may be the same as the operation modes of the first valve assembly 30c, which is not repeated here. The flow channels corresponding to the two valve assemblies may be in communication through an external pipeline, or a flow channel may be provided in the main housing 40, which is not described in detail in the present application.

Furthermore, the drive assembly 100 of the fluid control apparatus 1 includes a first housing 11, a first stator assembly 130d, a second stator assembly 130e, a first motor 132c, and a second motor 132d. The first pump assembly 20d includes a first rotor assembly 22d, and the second pump assembly 20e includes a second rotor assembly 22e. The first rotor assembly 22d can be located within the magnetic field range of the first stator assembly 130d, and the second rotor assembly 22e can be located within the magnetic field range of the second stator assembly 130e. The first valve core 31c of the first valve assembly 30c is in transmission connection with the first motor 132c, and the second valve core 31d of the second valve assembly 30d is in transmission connection with the second motor 132d. The drive assembly 100 has a first accommodation cavity 101, and the first housing 11 forms at least part of a wall portion of the first accommodation cavity 101. At least part of the first stator assembly 130d, at least part of the second stator assembly 130e, at least part of the first motor 132c, and at least part of the second motor 132d are located in the first accommodation cavity 101.

Furthermore, the drive assembly 100 may further include a controller 15 which is located inside the first accommodation cavity 101. The first stator assembly 130d, the second stator assembly 130e, the first motor 132c, and the second motor 132d are electrically connected to the controller 15. In order to reduce the area of the controller 15, as shown in FIG. 26, the first pump assembly 20d, the first valve assembly 30c, the second pump assembly 20e, and the second valve assembly 30d are arranged at intervals along the outer peripheral direction of the fluid control apparatus. The drive assembly 100 further includes a first gear assembly 133c and a second gear assembly 133d. The first motor 132c is in transmission connection with the first valve core 31c through the first gear assembly 133c, and the second motor 132d is in transmission connection with the second valve core 31d through the second gear assembly 133d. The first motor 132c and the second motor 132d are arranged along a first direction X, and the first stator assembly 130d and the second stator assembly 130e are arranged along a second direction Y, where the first direction X and the second direction Y intersect. Part of the first gear assembly 133c and part of the second gear assembly 133d are located between the first motor 132c and the second motor 132d, which facilitates centralized arrangement of control parts of the first motor 132c and the second motor 133d. An output terminal of the first stator assembly 130d and an output terminal of the second stator assembly 130e are arranged close to each other and located in the middle of the drive assembly 100. In this case, the control part of the pump assembly 20 and the control part of the valve assembly 30 can be arranged relatively concentrated, so as to reduce the area of the controller 15.

Furthermore, as shown in FIG. 36, in some embodiments, the fluid control apparatus 1 further includes a limiting assembly 50 which may be located in the fluid assembly 200. The pump assembly 20 includes a rotor assembly 22, a positioning shaft 222, and an isolation sleeve 23. At least part of the rotor assembly 22 is sleeved with the stator assembly 130, and the isolation sleeve 23 is arranged on an outer peripheral side of part of the rotor assembly 22, and at least part of the isolation sleeve 23 is located between the stator assembly 130 and the rotor assembly 22. The positioning shaft 222 is disposed on the inner side of the rotor assembly 22, and a first side of the positioning shaft 222 in the axial direction is limited to the isolation sleeve 23. The limiting assembly 50 is arranged close to a second side of the positioning shaft 222 in the axial direction. The limiting assembly 50 is limited to the rotor assembly 22, for example, the limiting assembly 50 abuts against the rotor assembly 22. In the embodiment, the axial direction of the positioning shaft 222 is parallel to or coincides with the height direction of the fluid control apparatus. With the above arrangement, both sides of the positioning shaft 222 in the axial direction can be position-limited, which improves the axial movement of the positioning shaft 222, thereby improving the axial movement of the rotor assembly 22 and reducing the noise of the pump assembly 20.

In some embodiments, the pump assembly 20 further includes a pump cover 24, where at least part of the pump cover 24 is located on the outer peripheral side of the impeller assembly 221, and at least part of the pump cover 24 is located inside the first chamber 401. At least part of the limiting assembly 50 is located at the pump cover 24, and the limiting assembly 50 has a groove 521. The end of the positioning shaft 222 on the second side is located in the groove 521 and abuts against a bottom wall portion of the groove 521. With the above arrangement, the isolation sleeve 23 can cooperate with the pump cover 24 to achieve the axial limit of the rotor assembly 22. Optionally, the pump cover 24 and the main housing 40 may be formed into an integral structure by injection molding; or, the pump cover 24 and the main housing 40 may be separately arranged and limitedly connected to each other, and in this case, a sealing ring is provided between the pump cover 24 and the main housing 40 to achieve the sealing between the two.

In some embodiments, the rotor assembly 22 further includes a first bearing 251 and a second bearing 252, which are arranged along the axial direction of the rotor assembly 22. Along the axial direction of the rotor assembly 22, the first bearing 251 is located between the connecting portion 232 of the isolation sleeve 23 and the magnetic assembly 223, and the second bearing 252 is located between the magnetic assembly 223 and the limiting assembly 50. With the above arrangement, the rotations of the magnetic element 223 and the impeller assembly 221 in the rotor assembly 22 can be achieved.

As shown in FIG. 26, in some embodiments, the limiting assembly 50 includes a first gasket 53 and a pump cover 24, where the first gasket 53 abuts between the second bearing 252 and the pump cover 24. Specifically, the pump cover 24 includes a support portion 52 and at least two connecting ribs 51. The first gasket 53 abuts between the second bearing 252 and the support portion 52. With the above arrangement, the wear between the pump cover 24 and the second bearing 252 can be reduced. In a specific implementation, the positioning shaft 222 and the isolation sleeve 23 may be formed into an integral structure by injection molding, and/or the magnetic assembly 223, the impeller assembly 221, the first bearing 251, and the second bearing 252 may be formed into an integral structure by injection molding, so as to achieve stable connection between various structural components and simplify the assembling process of the fluid control apparatus.

In some other embodiments, as shown in FIG. 22, the limiting assembly 50 includes a first limiting component 541, a second gasket 542, and a third gasket 543. The first limiting component 541 is fixedly connected to the positioning shaft 222. Along the axial direction of the rotor assembly 22, the second gasket 542 abuts between the first bearing 251 and the connecting portion 232. The first limiting component 541 includes a first flange portion 5411 and a columnar portion 5412. Along the axial direction of the first limiting component 541, at least part of the orthographic projection of the columnar portion 5412 is located within the orthographic projection of the first flange portion 5411, and the third gasket 543 is limited between the first flange portion 5411 and the second bearing 252. With the above arrangement, when an electric pump device 20 is assembled with the main housing 40, an impeller assembly 22 of the electric pump device 20 may be arranged downwards (the up-down direction in the drawing). In this case, the structures, such as the impeller assembly 22, are limited by the limiting assembly 50, which facilitates the assembly of the electric pump device 20 with the main housing 40. In the embodiment, the positioning shaft 222 and the isolation sleeve 23 may be formed into an integral structure by injection molding, and/or the magnetic assembly 223, the impeller assembly 221, the first bearing 251, and the second bearing 252 may be formed into an integral structure by injection molding, so as to achieve stable connection among the various structural components and simplify the assembling process of the fluid control apparatus.

In order to realize a fastening connection between the first limiting component 541 and the positioning shaft 222, in some embodiments, the first limiting component 541 has a first threaded portion which is located at the columnar portion 5412, and the positioning shaft 222 has a second threaded portion. The first threaded portion is threadedly connected to the second threaded portion. Alternatively, the first limiting component 541 and the positioning shaft 222 may also be connected to each other by riveting.

In other embodiments, as shown in FIG. 23, at least part of the first bearing 251 is sleeved between the outer peripheral side of the positioning shaft 222 and the connecting portion 232 of the isolation sleeve 23. Along the axial direction of the rotor assembly 22, the limiting assembly 50 is located between the magnetic assembly 223 and the impeller assembly 221. The limiting assembly 50 includes a second limiting component 551 and a fourth gasket 552. The second limiting component 551 is limited to the isolation sleeve 23 and is sealingly connected to the isolation sleeve 23, for example, the second limiting component 551 is welded to the isolation sleeve 23. The second limiting component 551 is located on a side of the magnetic assembly 223 away from the connecting portion 232. The second bearing 252 is sleeved between the outer peripheral side of the positioning shaft 222 and the second limiting component 551. Along the axial direction of the rotor assembly 22, the fourth gasket 552 abuts between the second bearing 252 and the magnetic assembly 223. Specifically, the second limiting component 551 includes a second flange portion 5511 and a second columnar portion 5512. Along the axial direction of the second limiting component 551, at least part of the orthographic projection of the second columnar portion 5512 is located within the orthographic projection of the second flange portion 5511, and the second flange portion 5511 is sealingly connected to the isolation sleeve 23. In a specific implementation, in the embodiment, the positioning shaft 222 and the magnetic assembly 223 may be formed into an integral structure by injection molding, the isolation sleeve 23 and the first bearing 251 may be formed into an integral structure by injection molding, and the impeller assembly 221 is assembled with and connected to the positioning shaft 222. With the above arrangement, the axial limiting of the rotor assembly 22 can be achieved.

In summary, according to the embodiment of the present application, the fluid control apparatus 1 includes a drive assembly 100 and at least two fluid sub-assemblies LK. The drive assembly 100 includes at least two drive components 13, where at least one of the drive components 13 includes a stator assembly 130, and at least part of the stator assembly 130 is limitedly connected in the limiting portion 112 of the first housing 11. At least one fluid sub-assembly LK includes a pump assembly 20, and the pump assembly 20 includes a rotor assembly 22. The rotor assembly 22 is located within the magnetic field range of the corresponding stator assembly 130, the drive component 13 can drive the corresponding fluid sub-assemblies LK to act, and the drive assembly 100 includes the drive components 13 for driving the at least two fluid sub-assemblies LK to act. Compared with the case that a separate driving device is provided for each fluid sub-assembly LK, the fluid control apparatus 1 according to the embodiment of the present application can reduce the space occupied by the drive assembly 100 and improve the integration degree of the drive assembly 100. Furthermore, the at least two fluid sub-assemblies LK may be integrated into one main housing 40, so as to improve the integration degree of the fluid control apparatus 1 and reduce the space occupied by the fluid control apparatus 1. Moreover, by providing the limiting assembly 50, the positioning shaft 222 can be axially limited, so that the structures, such as the rotor assembly 22 can be well axially limited.

In another aspect, an electric pump device is further provided according to an embodiment of the present application. The electric pump device includes a stator assembly 130, a pump assembly 20, and a limiting assembly 50. The pump assembly 20 includes a rotor assembly 22, a positioning shaft 222, an isolation sleeve 23, and a pump cover 24. At least part of the rotor assembly 22 is sleeved with the stator assembly 130. Optionally, at least part of the rotor assembly 22 is located on an inner side of the stator assembly 130. The isolation sleeve 23 is arranged on an outer peripheral side of part of the rotor assembly 22, and at least part of the isolation sleeve 23 is located between the stator assembly 130 and the rotor assembly 22. The positioning shaft 222 is arranged on an inner side of the rotor assembly 22, and a first side of the positioning shaft 222 in the axial direction is limited to the isolation sleeve 23. The limiting assembly 50 is arranged close to a second side of the positioning shaft 222 in the axial direction, and the limiting assembly 50 abuts against the rotor assembly 22. With the above arrangement, the axial limit of the rotor assembly 22 and the positioning shaft 222 can be achieved. In the embodiment of the present application, structures of the stator assembly 130, the pump assembly 20, and the limiting assembly 50 are the same as or similar to structures of the stator assembly 130, the pump assembly 20, and the limiting assembly 50 provided in any embodiment of FIG. 1 to FIG. 27, which is not repeated herein.

In some embodiments, the rotor assembly 22 includes a magnetic assembly 223 and an impeller assembly 221. At least part of the impeller assembly 221 and the magnetic assembly 223 are arranged along the axial direction of the rotor assembly 22. At least part of the magnetic assembly 223 is arranged on an inner surface side of the stator assembly 130. The isolation sleeve 23 includes an end wall portion 231 and a connecting portion 232, and the extension direction of the end wall portion 231 intersects with the axial direction of the rotor assembly 22. The rotor assembly 22 includes a first bearing 251 and a second bearing 252 which are arranged along the axial direction of the rotor assembly 22. The first bearing 251 is located between the connecting portion 232 and the magnetic assembly 223, and the second bearing 252 is located between the magnetic assembly 223 and the limiting assembly 50. With the above arrangement, the stable rotation of the rotor assembly 22 can be realized, and the rotor assembly 22 can be axially limited.

As shown in FIG. 22, in some embodiments, the limiting assembly 50 includes a first limiting component 541, a second gasket 542, and a third gasket 543. The first limiting component 541 is fixedly connected to the positioning shaft 222. Along the axial direction of the rotor assembly 22, the second gasket 542 abuts between the first bearing 251 and the connecting portion 232. The first limiting component 541 includes a first flange portion 5411 and a columnar portion 5412. Along the axial direction of the first limiting component 541, at least part of the orthographic projection of the columnar portion 5412 is located within the orthographic projection of the first flange portion 5411, and the third gasket 543 is limited between the first flange portion 5411 and the second bearing 252.

Alternatively, as shown in FIG. 23, in some embodiments, the limiting assembly 50 is located between the magnetic assembly 223 and the impeller assembly 221. The limiting assembly 50 includes a second limiting component 551 and a fourth gasket 552. The second limiting component 551 is limited to the isolation sleeve 23 and is sealingly connected to the isolation sleeve 23, and the second limiting component 551 is located on a side of the magnetic assembly 223 away from the connecting portion 232. The second bearing 252 is sleeved between the outer peripheral side of the positioning shaft 222 and the second limiting component 551. Along the axial direction of the rotor assembly 22, the fourth gasket 552 abuts between the second bearing 252 and the magnetic assembly 223.

In the electric pump device, the electric pump device may include a pump housing, and the pump housing is covered on the outer side of the stator assembly. At least part of the housing cover is located on a side of the stator assembly away from the rotor assembly. The limiting way of the pump housing and the stator assembly is similar to the limiting way of the first housing 11 and the stator assembly 130 described in any of the above embodiments, for example, the stator assembly 130 and the pump housing may be integrally formed by injection molding, or the stator assembly 130 may be located in a chamber of the pump housing. In a specific implementation, in the case that the stator assembly 130 and the pump housing are formed into an integral structure by injection molding, the isolation sleeve 23 and the pump housing may be formed into an integral structure by injection molding, or the isolation sleeve 23 and the pump housing may be separately arranged and be sealingly connected to each other. In the case that the stator assembly 130 is assembled into the mounting cavity QS of the pump housing, the isolation sleeve 23 and the pump housing may be formed into an integral structure by injection molding, or, the isolation sleeve 23 and the pump housing may be separately arranged and be sealingly connected to each other, or, the isolation sleeve 23 and the stator assembly 130 may be formed into an integral structure by injection molding and a whole formed by the isolation sleeve 23 and the stator assembly 130 may be separately arranged from the pump housing and be sealingly connected to the pump housing. In a case that the number of the stator assemblies 130 is at least two, the limit connection ways between different stator assemblies 130 and the first housing 11 may be the same or different, and the connection ways between the isolation sleeves 23 corresponding to different stator assemblies 130 and the first housing 11 may be the same or different.

In yet another aspect, referring to FIG. 1 to FIG. 45, a method 1000 for manufacturing a fluid control apparatus is further provided according to an embodiment of the present application. The method includes the following steps S110 to S130.

In step S110, a drive assembly 100 is formed.

In some embodiments, the step S110 of forming the drive assembly 100 includes: providing a first housing 11 and at least two drive components 13, where the first housing 11 has a first accommodation cavity 101, the first housing 11 includes a bottom wall portion 111 and a limiting portion 112, the bottom wall portion 111 forms part of a wall portion of the first accommodation cavity 101, at least part of the limiting portion 112 protrudes from the bottom wall portion 111, and at least one drive component 13 includes a stator assembly 130; and limitedly connecting at least part of the stator assembly 130 in the limiting portion 112. The limiting portion 112 protrudes from the bottom wall portion 112 along the height direction of the drive assembly 100, and the limiting portion 112 may extend in a direction away from the first accommodation cavity 101.

In some embodiments, at least part of the stator assembly 130 is limitedly connected in the limiting portion 112 in the following manners. The stator assembly 130 is used as an injection molding insert, and the at least part of the stator assembly 130 and the limiting portion form 112 are formed into an integral structure by injection molding. Alternatively, the limiting portion 112 includes a mounting cavity QS, and the at least part of the stator assembly 130 is mounted inside the mounting cavity QS and is limitedly matched with the limiting portion 112 of the first housing 11. In this case, at least part of an output terminal 1304 in the stator assembly 130 is located inside the first accommodation cavity 101, so that the output terminal 1304 can be electrically connected to the controller 15 in the drive assembly 100 or an external controller.

In some other embodiments, the fluid control apparatus may include an isolation sleeve 23. In this case, after the step of limitedly connecting at least part of the stator assembly 130 in the limiting portion 112, the isolation sleeve 23 and the first housing 11 may be formed into an integral structure by injection molding, so that part of the isolation sleeve 23 is located on the inner side of the stator assembly 130. The isolation sleeve 23 is sealingly connected to the first housing 11, so as to isolate the stator assembly 130 from the outside and prevent the external moisture and the like from affecting the stator assembly 130.

In step S120, at least part of a fluid assembly 200 is formed.

In the embodiment, the step S300 of forming the fluid assembly 200 includes: providing at least two fluid sub-assemblies LK and providing a main housing 40.

In the embodiment, at least one fluid sub-assembly LK includes a pump assembly 20. As shown in FIG. 1 to FIG. 26, in the embodiment of the present application, the number of the fluid sub-assemblies LK is five, where each of three of the five fluid assemblies includes a pump assembly 20 and each of the other two of the five fluid assemblies includes a valve assembly 30. In some other embodiments, the number of the fluid sub-assemblies LK may be two, each of the two fluid sub-assemblies LK may include a pump assembly 20, or one of the two fluid sub-assemblies LK includes a pump assembly 20 and the other includes a valve assembly 30. The number of the fluid sub-assemblies LK may be set according to the requirements of the user, and the number of the pump assemblies 20 and the number of the valve assemblies 30 may also be set according to the requirements of the user.

The main housing 40 has first chambers 401 that are arranged at intervals, a first duct 404, and a second duct 405, both of the first duct 404 and the second duct 405 are in communication with the first chamber 401. In this case, the step S120 of forming at least part of the fluid assembly 200 may further include: assembling the pump assembly 20 with the main housing 40 so that at least part of the pump assembly 20 is located in the first chamber 401, and the rotor assembly 22 is rotated to drive the fluid to flow in the first duct 404 and the second duct 405. With the above arrangement, the pump assembly 20 can be located in the first chamber 401.

In a specific implementation, in case that each of at least two fluid sub-assemblies LK includes a pump assembly 20, multiple pump assemblies 20 may be assembled with the main housing to form at least part of the fluid assembly 200. Specifically, the pump assembly 20 may include an isolation sleeve 23 and a rotor assembly 22. In this way, before the step of assembling the pump assembly 20 with the main housing 40, a step of forming the pump assembly 20 may be included. For example, the rotor assembly 22 may be first sleeved on the inner side of the isolation sleeve 23, so that the isolation sleeve 23 and the rotor assembly 22 are assembled into an integral structure to form the pump assembly 20, and then the integral structure is assembled with the main housing 40. Alternatively, in a case that the pump assembly 20 further includes a pump cover 40, the isolation sleeve 23, the rotor assembly 22, and the pump cover 24 may be assembled into an integral structure first. Alternatively, the step of assembling the pump assembly 20 with the main housing 40 may include: assembling the isolation sleeve 23 and the rotor assembly 22 to the main housing 40 respectively, and then sealingly connecting the isolation sleeve 23 to the main housing 40. Alternatively, in a case that the pump assembly 20 further includes a limiting assembly 50, the limiting assembly 50 may be fitted to the positioning shaft 222 in a limited way to form an integral structure, and then the integral structure is assembled with the main housing 40. Alternatively, in a case that the limiting assembly 50 is located at the main housing 40, the pump assembly 20 may be assembled with the main housing 40 to achieve axial limiting of the positioning shaft 222, the rotor assembly 22 and other structures, which is not limited in the present application.

In some embodiments, at least one fluid sub-assembly LK includes a pump assembly 20, and at least one fluid sub-assembly LK includes a valve assembly 30. The valve assembly 30 includes a valve core 31 and a valve core shaft 32. At least one drive component 13 includes a motor 132, and the main housing 40 further includes a bottom cover and a chamber housing 45. In this case, the step S120 of forming at least part of the fluid assembly 200 includes the following steps S1 to S4.

In step S1, the main housing 40 is provided. The main housing 40 has a first chamber 401, a second chamber 402, a first duct 404, a second duct 405, and multiple flow channels 406. The first chamber 401 and the second chamber 402 are spaced apart, and both the first duct 404 and the second duct 405 are in communication with the first chamber 401.

In step S2, the pump assembly 20 is assembled with the main housing 40, so that at least part of the pump assembly 20 is located inside the first chamber 401, and thus the rotation of the rotor assembly 22 can drive the fluid to flow between the first duct 404 and the second duct 405, which facilitates the pump assembly 20 to drive the fluid.

In step S3, at least part of the valve assembly 30 is assembled into a corresponding chamber of the main housing 40. That is, at least part of the valve assembly 30 is assembled into the second chamber 402 of the main housing 40, and the valve assembly 30 is limitedly connected to the main housing 40, so that the communication cavity 31 of the valve core 31 can communicate at least two flow channels 406. Specifically, the valve core 31 and the valve core shaft 32 may be assembled into the second chamber 402, and at least part of the valve core shaft 32 passes through the second chamber 402 and is in transmission connection with the output shaft of the motor 132. Alternatively, in a case that the drive assembly 100 further includes a gear assembly 133, the gear assembly 133 is in transmission connection with the drive assembly 100, and at least part of the valve core shaft 32 passes through the second chamber 402 and is in transmission connection with the gear assembly 133.

In step S4, the bottom cover is sealingly connected to the main housing 40.

For example, the bottom cover may be sealed with the main housing by welding, thereby achieving limiting connection between the valve assembly 30 and the main housing 40. In a specific implementation, the valve assembly 30 may include a first valve assembly 30a and a second valve assembly 30b, and the main housing 40 includes a chamber housing 45, a first bottom cover 42, and a second bottom cover 43. It can be understood that, the steps S2 and S3 may be implemented simultaneously, or one of the steps S2 and S3 may be implemented first and then the other is implemented.

In Step S130, the drive assembly 100 is sealingly connected to the fluid assembly 200.

In a specific implementation, the drive assembly 100 can be matched with the pump assembly 20. For example, at least part of the rotor assembly 22 of the pump assembly 20 is located on the inner side of the corresponding stator assembly 130, and part of the isolation sleeve 23 is located between the stator assembly 130 and the corresponding rotor assembly 22. The rotor assembly 22 can be located within the magnetic field range of the corresponding stator assembly 130. When the coil winding in the stator assembly 130 is energized, a magnetic field can be generated, so that the stator assembly 130 can drive the rotor assembly 22 to rotate. In order to achieve a sealing connection between the drive assembly 100 and the fluid assembly 200, a sealing ring may be provided between the drive assembly 100 and the fluid assembly 200. The drive assembly 100 and the fluid assembly 200 are connected to each other by a fastener, such as screw, and the sealing ring is compressed, so as to achieve the sealing connection between the drive assembly 100 and the fluid assembly 200.

In some embodiments, the fluid sub-assemblies LK further includes a valve assembly 30 and the main housing 40 further includes multiple flow channels 406. The first chamber 401 has a first mounting port K1, and the second chamber 402 has a second mounting port K2. The first mounting port K1 is located at a first side portion of the chamber housing 45, the second mounting port K2 is located at a second side portion of the chamber housing 45. The first side portion and the second side portion are arranged on two sides of the chamber housing in the height direction. The multiple flow channels 406 are distributed on the outer peripheral side of the second chamber 402. The first mounting port K1 of the first chamber 401 and the second mounting port K2 of the second chamber 402 are arranged at different surfaces of the main housing 40. For example, in FIG. 1 to FIG. 25, the first mounting port K1 of the first chamber 401 and the second mounting port K2 of the second chamber 402 are arranged on two opposite sides of the main housing 40 along the height direction of the main housing 40.

In this case, the step S120 of forming at least part of the fluid assembly 200 is implemented at least in the following manner. The pump assembly 20 is assembled with the main housing 40 from one side of the main housing 40. In this way, the pump assembly 20 passes through the first mounting port K1, so that at least part of the pump assembly 20 is located inside a first chamber 401. At least part of the valve assembly 30 is assembled into the second chamber 402 of the main housing 40 from the other side of the main housing 40. In this way, at least part of the valve assembly 30 passes through the second mounting port K2, so that at least part of the valve assembly 30 is located inside the second chamber 402. In a specific implementation, in a case that the valve assembly 30 includes a valve core 31 and a valve core shaft 32, the valve core shaft 31 and the valve core 32 may pass through the second mounting port K2, so that the valve core 31 is located inside the second chamber 402, and at least part of the valve core shaft 32 is located outside the main housing 40, thereby achieving the transmission connection between the valve core shaft 32 and a transmission assembly, such as the motor 132. In a case that the number of the pump assemblies 20 is at least two and the number of the valve assemblies 30 is at least two, all of the pump assemblies 20 may pass through the first mounting port K1 from one side of the main housing 40 to be assembled with the main housing 40, all of the valve assemblies 30 may pass through the second mounting port K2 from the other side of the main housing 40 to be assembled with the main housing 40, and then, the bottom cover is sealingly connected to the chamber housing 45 of the main housing 40.

Alternatively, at least part of the pump assembly 20 may be assembled into the first chamber 401 of the main housing 40 first, and then the drive assembly 100 is sealingly connected to the main housing 40 which is assembled with the pump assembly 20. In this case, after the step S13 of sealingly connecting the drive assembly 100 to the fluid assembly 200, the method may further include: assembling at least part of the valve assembly 30 into the corresponding second chamber 402 of the main housing 40, and limitedly connecting the valve assembly 30 to the main housing 40. In some embodiments, the main housing 40 further includes a bottom cover. After assembling at least part of the valve assembly 30 into the corresponding chamber of the main housing 40, the bottom cover may be sealingly connected to the chamber housing of the main housing 40. For example, the bottom cover may be sealed to the main housing by welding, thereby achieving the limit connection between the valve assembly 30 and the main housing 40 and sealing the second mounting port K2.

In summary, the method for manufacturing a fluid control apparatus according to the embodiment of the present application facilitates the integration of at least two drive components 13 into one drive assembly. Compared with the case of providing a separate driving device for each fluid sub-assembly LK, the fluid control apparatus 1 according to the embodiment of the present application can reduce the space occupied by the drive assembly 100 and improve the integration degree of the drive assembly 100. Furthermore, at least two fluid sub-assemblies LK may be integrated into one main housing 40, which improves the integration degree of the fluid control apparatus 1 and reduces the space occupied by the fluid control apparatus 1. Moreover, by providing the limiting assembly 50, the positioning shaft 222 can be axially limited, thereby achieving good axial limitation of the rotor assembly 22 and other structures. The structure of the fluid control apparatus manufactured by the method for manufacturing a fluid control apparatus is shown in FIG. 1 to FIG. 44, which is not repeated.

It should be noted that, the above embodiments are only used to illustrate the present application, and are not intended to limit the technical solutions described in the present application, such as the directional definitions such as "front", "back", "left", "right", "up", "down" and the like. Although the present application is described in detail in this specification with reference to the above embodiments, those skilled in the art should understood that, modifications, combinations or equivalent substitutions may be made to the present application by those skilled in the art, and all the technical solutions and improvements without departing from the spirit and scope of the present application should be included in the scope of the claims of the present application.

## Claims

1. A fluid control apparatus, comprising:
a drive assembly; and
a fluid assembly, which is connected to the drive assembly; wherein
the fluid assembly comprises at least two fluid sub-assemblies, the drive assembly comprises a first housing and drive components, and each of the drive components cooperates with a corresponding one of the at least two fluid sub-assemblies;
the first housing comprises a bottom wall portion and a limiting portion connected to the bottom wall portion, and at least part of the limiting portion protrudes from the bottom wall portion;
at least one of the drive components comprises a stator assembly, the drive component comprising the stator assembly is defined as a first drive component, at least part of the first drive component is connected in the limiting portion in a limited manner, and at least another one of the drive components is connected to the first housing in a limited manner; and
at least one of the at least two fluid sub-assemblies comprises a pump assembly, the pump assembly comprises a rotor assembly, the rotor assembly comprises a magnetic assembly, and the magnetic assembly is configured to be located within a magnetic field range of a corresponding stator assembly in an operating state.

2. The fluid control apparatus according to claim 1, wherein
at least part of the limiting portion extends from the bottom wall portion toward the fluid sub-assembly; and
the stator assembly is fixed to the limiting portion by injection molding; or, the first housing and the stator assembly are separate from each other, the limiting portion has a mounting cavity, and at least part of the stator assembly is located inside the mounting cavity.

3. The fluid control apparatus according to claim 1 or claim 2, wherein
the pump assembly further comprises an isolation sleeve, part of the isolation sleeve is located between the stator assembly and a corresponding rotor assembly;
the isolation sleeve is fixed to the first housing by injection molding, or, the isolation sleeve and the first housing are separated from each other and sealingly connected to each other; and
the isolation sleeve is fixed to the stator assembly by injection molding, or, the isolation sleeve and the stator assembly are separated from each other and at least part of the stator assembly is located between the isolation sleeve and the first housing.

4. The fluid control apparatus according to claim 3, wherein
each of at least two of the at least two fluid sub-assemblies comprises a pump assembly, each of at least two of the drive components comprises a stator assembly, one of the pump assemblies is defined as a first pump assembly, another one of the pump assemblies is defined as a second pump assembly, one of the stator assemblies is defined as a first stator assembly, and another one of the stator assemblies is defined as a second stator assembly;
the limiting portion comprises a first limiting portion and a second limiting portion, at least part of the first stator assembly is connected in the first limiting portion in a limited manner, and at least part of the second stator assembly is connected in the second limiting portion in a limited manner; and
the first pump assembly comprises a first rotor assembly, the second pump assembly comprises a second rotor assembly, part of the first rotor assembly is located on an inner side of the first stator assembly, and part of the second rotor assembly is located on an inner side of the second stator assembly.

5. The fluid control apparatus according to claim 3, wherein
at least one of the at least two fluid sub-assemblies comprises a pump assembly, at least another one of the at least two fluid sub-assemblies comprises a valve assembly, at least one of the drive components comprises a stator assembly, and at least another one of the drive components comprises a motor; and
the first housing further comprises a mounting portion, the mounting portion is spaced apart from the limiting portion, the motor is connected to the mounting portion in a limited manner, the valve assembly comprises a valve core, and the valve core is in transmission connection with an output shaft of the motor.

6. The fluid control apparatus according to claim 5, wherein
the drive assembly has a first accommodation cavity, and the bottom wall portion forms part of a wall portion of the first accommodation cavity;
the fluid control apparatus further comprises a main housing, and at least part of the main housing is located on a side of the first housing away from the first accommodation cavity, and the main housing has a first chamber, a second chamber, a first duct, and a second duct; wherein the first chamber and the second chamber are spaced apart from each other, and both the first duct and the second duct are in communication with the first chamber; and
at least part of the pump assembly is located inside the first chamber, and at least part of the valve core is located inside the second chamber.

7. The fluid control apparatus according to claim 6, wherein
the main housing further has a communication channel and a plurality of flow channels, the plurality of flow channels are distributed on an outer peripheral side of the second chamber, one of the plurality of flow channels is in communication with one of the first duct and the second duct through the communication channel, the valve core comprises a communication cavity, and the communication cavity is configured to communicate at least two of the plurality of flow channels;
the main housing comprises a chamber housing, the chamber housing forms at least part of a wall portion of the first chamber and at least part of a wall portion of the second chamber, the first chamber has a first mounting port, the second chamber has a second mounting port, the first mounting port is located at a first side portion of the chamber housing, the second mounting port is located at a second side portion of the chamber housing, and the first side portion and the second side portion are located on two sides of the chamber housing in a height direction.

8. The fluid control apparatus according to claim 7, wherein
the isolation sleeve is fixed to the main housing by injection molding; or
the isolation sleeve and the main housing are separated from each other and the isolation sleeve is sealingly connected to the main housing.

9. The fluid control apparatus according to any one of claims 1, 2, 4 to 8, wherein
the drive assembly has a first accommodation cavity, the fluid control apparatus further comprises a controller and a connection terminal, the controller is located inside the first accommodation cavity, and at least part of the connection terminal is located outside the first accommodation cavity; and
the connection terminal is electrically connected to the controller, and at least two of the drive components are electrically connected to the controller.

10. The fluid control apparatus according to claim 9, wherein
the first drive component further comprises a pump housing and a transition terminal limited to the pump housing, the pump housing is sealingly connected to the first housing, and at least part of the stator assembly is located inside a chamber of the pump housing; and
the stator assembly comprises a coil winding, the coil winding is electrically connected to a pin in the transition terminal, part of the transition terminal passes through the bottom wall portion and is located inside the first accommodation cavity, and the transition terminal is electrically connected to the controller.

11. A method for manufacturing a fluid control apparatus, comprising:
forming a drive assembly, comprising:
providing a first housing and at least two drive components, wherein the first housing comprises a bottom wall portion and a limiting portion, the first housing has a first accommodation cavity, the bottom wall portion forms part of a wall portion of the first accommodation cavity, at least part of the limiting portion protrudes from the bottom wall portion, and at least one of the at least two drive components comprises a stator assembly; and
connecting at least part of the stator assembly in the limiting portion in a limited manner;
providing at least two fluid sub-assemblies, wherein at least one of the at least two fluid sub-assemblies comprises a pump assembly, and the pump assembly comprises a rotor assembly; and
matching the drive assembly with the pump assembly to allow a magnetic assembly of the rotor assembly to be located within a magnetic field range of a corresponding stator assembly in an operating state.

12. The method for manufacturing a fluid control apparatus according to claim 11, wherein connecting at least part of the stator assembly in the limiting portion in a limited manner comprises:
fixing the stator assembly to the limiting portion by injection molding; or
mounting the at least part of the stator assembly in a mounting cavity of the limiting portion in a limited manner.

13. The method for manufacturing a fluid control apparatus according to claim 11, further comprising:
forming at least part of the fluid assembly, comprises:
providing a main housing, wherein the main housing has a first chamber; and
assembling the pump assembly with the main housing so that at least part of the pump assembly is located in the first chamber;
sealingly connecting the drive assembly to the fluid assembly.

14. The method for manufacturing a fluid control apparatus according to claim 13, wherein
at least one of the at least two fluid sub-assemblies comprises a valve assembly, the valve assembly comprises a valve core and a valve core shaft, at least one of the at least two drive components comprises a motor, the main housing further comprises a second chamber spaced apart from the first chamber, the forming at least part of the fluid assembly further comprises:
assembling the valve core and the valve core shaft into the second chamber, wherein at least part of the valve core shaft passes through the second chamber and is in transmission connection with an output shaft of the motor; and
sealingly connecting a bottom cover to the main housing to form the fluid assembly.

15. A drive assembly, comprising a first housing and drive components, wherein
the first housing comprises a bottom wall portion and a limiting portion, the bottom wall portion is connected to the limiting portion, at least part of the limiting portion protrudes from the bottom wall portion; and
at least one of the drive components comprises a stator assembly, and the drive component comprising the stator assembly is defined as a first drive component, at least part of the first drive component is connected in the limiting portion in a limited manner, and at least another one of the drive components is connected to the first housing in a limited manner.
